# EUROPEAN PATENT APPLICATION

(11) **EP 4 336 874 A1**
(43) Date of publication of application: **13.03.2024**
(21) Application number: 22814839.1
(22) Date of filing: 31.03.2022
(51) Int. Cl.: H04W 4/80, G06K 7/10, H04B 5/00

(54) **NFC-BASED DATA INTERACTION METHOD AND DEVICE**

(30) Priority: 04.06.2021 CN 202110626646
(71) Applicant: Huawei Technologies Co., Ltd., Shenzhen, Guangdong 518129 (CN)
(72) Inventor: LV, Sen, Shenzhen, Guangdong 518129 (CN); YAO, Zhendong, Shenzhen, Guangdong 518129 (CN)
(74) Representative: Gill Jennings & Every LLP
(86) International application number: PCT/CN2022/084673
(87) International publication number: WO 2022/252792

(57) **Abstract**

Embodiments of this application provide an NFC-based data exchange method and a device, and relate to the field of electronic technologies. After determining, by using a private card searching request command, that a tag device approaches, a card reader device reads information about a silent tag of the tag device, and does not read the information about the silent tag when the tag device is continuously in position. In this way, an NFC function of the card reader device can be normal. The solution includes: A first electronic device sends a first card searching request command. The first electronic device reads information about a first NFC tag after receiving a first card searching answer to request command from the first NFC tag. After the first electronic device reads the information about the first NFC tag, the first electronic device continues to send a first card searching request command, continues to receive a card searching answer to request command from the first NFC tag, and skips reading the information about the first NFC tag. Embodiments of this application are used to read an NFC tag.

## Description

This application claims priority to Chinese Patent Application No. 202110626646.0, filed with the China National Intellectual Property Administration on June 4, 2021 and entitled "NFC-BASED DATA EXCHANGE METHOD AND DEVICE", which is incorporated herein by reference in its entirety.

### TECHNICAL FIELD

Embodiments of this application relate to the field of electronic technologies, and in particular, to a near field communication (near field communication, NFC)-based data exchange method and a device.

### BACKGROUND

In scenarios such as home or office, a user uses increasing intelligent electronic devices. Data communication between electronic devices can further improve user experience. Increasing wireless technologies are gradually applied to communication and data exchange between electronic devices. An NFC technology is used by increasing electronic devices as a bridge carrier for fast data exchange due to its convenience, security, and other attributes.

In the NFC technology, an NFC tag may store data, and an electronic device may read information about the NFC tag when the NFC tag approaches the electronic device that supports an NFC card reader.

However, according to an NFC protocol and a processing procedure, when the NFC tag and the electronic device that supports the NFC card reader are always in a close state, the electronic device cannot read information about another NFC tag. As a result, an NFC function of the electronic device fails.

### SUMMARY

Embodiments of this application provide an NFC-based data exchange method and a device. A card reader device may read information about a silent tag after determining, according to a private NFC card searching request command, that a tag device approaches. Then, even if the tag device and the card reader device are always in a close state, the card reader device can read information about another NFC tag. In this way, an NFC function of the card reader device can be normally performed.

To achieve the foregoing objective, the following technical solutions are used in embodiments of this application.

According to one aspect, an embodiment of this application provides a data exchange method, applied to a system that includes a first electronic device and a first near field communication NFC tag. The method includes: The first electronic device sends a first card searching request command. The first NFC tag sends a first card searching answer to request command to the first electronic device after receiving the first card searching request command from the first electronic device. The first electronic device reads information about the first NFC tag after receiving the first card searching answer to request command from the first NFC tag. After the first electronic device reads the information about the first NFC tag, the first electronic device continues to send a first card searching request command, continues to receive a card searching answer to request command from the first NFC tag, and skips reading the information about the first NFC tag.

Based on this solution, after the first electronic device continues to receive the first card searching answer to request command from the first NFC tag, when the first NFC tag is continuously in position, the first electronic device no longer reads the information about the first NFC tag. Therefore, NFC card searching commands including standard card searching commands and private card searching commands can be normally listened to and sent without being continuously in a data reading procedure, and information about other NFC tags can be normally read. In this way, functions such as NFC card reading, card swiping, and P2P can be normally performed. In addition, when the first NFC tag is continuously in position, the first electronic device no longer reads the information about the first NFC tag, which can reduce power consumption of the electronic device. In addition, the first electronic device reads information about a silent tag that can respond to a first card searching request command, instead of any general NFC tag. Therefore, unnecessary data reading is not easily caused, and on-demand triggering and on-demand data reading can be implemented.

In a possible design, an initial in-position status of the first NFC tag is not-in-position, and the method further includes: providing the first electronic device with a first identifier, where the first identifier indicates whether the first electronic device detects the first NFC tag; before the first electronic device receives the first card searching answer to request command from the first NFC tag, a value of the first identifier is a first value, where the first value indicates that the first electronic device does not detect the first NFC tag; and after the first electronic device receives the first card searching answer to request command from the first NFC tag, the first electronic device changes the value of the first identifier from the first value to a second value, where the second value indicates that the first electronic device detects the first NFC tag.

In this way, the first electronic device may indicate, by using the first identifier, whether the first NFC tag is detected. Before receiving the first card searching answer to request command, the first electronic device determines that the first NFC tag is not detected. After receiving the first card searching answer to request command, the first electronic device determines that the first NFC tag is detected.

In a possible design, the method further includes: After the first electronic device continues to send the first card searching request command, if the first electronic device does not receive the first card searching answer to request command from the first NFC tag within preset duration, the first electronic device changes the value of the first identifier from the second value to the first value; or if the first electronic device receives the first card searching answer to request command from the first NFC tag within the preset duration, the first electronic device keeps the value of the first identifier as the second value.

In this solution, after the first electronic device continues to send the first card searching request command, if the first electronic device does not receive the first card searching answer to request command from the first NFC tag within the preset duration, the first NFC tag may be far away from the first electronic device. An in-position status of the first NFC tag is switched to "not-in-position", the first electronic device cannot detect the first NFC tag, and the first identifier is set to the first value. If the first electronic device receives the first card searching answer to request command from the first NFC tag within the preset duration, the first NFC tag and the first electronic device are still in a close state, the first electronic device can still detect the first NFC tag, and setting of the first identifier remains the second value.

In another possible design, the method further includes: The first electronic device increases a time interval for continuing to send the first card searching request command.

If the in-position status of the first NFC tag is in-position, and the first electronic device receives the first card searching answer to request command from the first NFC tag, it may indicate that the first NFC tag is continuously in position. In this case, the first electronic device may not need to frequently detect, in real time by using first card searching request commands, whether the first NFC tag is continuously in position. Therefore, the time interval for sending the first card searching request commands may be increased, to reduce power consumption of the first electronic device.

In another possible design, the system further includes a second NFC tag. After the first electronic device reads the information about the first NFC tag, the method further includes: The first electronic device sends a second card searching request command. If the first electronic device receives a second card searching answer to request command from the second NFC tag, where the second card searching answer to request command is a response of the second NFC tag to the second card searching request command, the first electronic device reads information about the second NFC tag.

In this way, after the first electronic device finishes reading the information about the first NFC tag, even when the first NFC tag is continuously in position, the first electronic device may still read data of the other NFC tags. In this way, an NFC function of the first electronic device may also be performed normally.

In another possible design, after the first electronic device reads the information about the first NFC tag, the method further includes: The first electronic device performs service processing based on the information about the first NFC tag.

In other words, the first electronic device may perform related service processing based on the read information about the first NFC tag.

In another possible design, the information about the first NFC tag includes identification information of a second electronic device in which the first NFC tag is located. That the first electronic device performs service processing based on the information about the first NFC tag includes: The first electronic device charges the second electronic device based on the identification information of the second electronic device in the first NFC tag.

In other words, the first electronic device may enable reverse charging based on NFC.

In another possible design, that the first electronic device performs service processing based on the information about the first NFC tag includes: The first electronic device switches a theme of the first electronic device based on the information about the first NFC tag.

In other words, the first electronic device may switch the theme based on NFC. For example, the information about the first NFC tag may include customized theme information.

In another possible design, the information about the first NFC tag includes a charger anti-counterfeiting identifier and/or a charging optimization parameter. That the first electronic device performs service processing based on the information about the first NFC tag includes: The first electronic device performs charger anti-counterfeiting check and/or configures the charging parameter based on the information about the first NFC tag.

In other words, the first electronic device may perform charger anti-counterfeiting check and/or configure the charging parameter based on NFC. For example, the information about the first NFC tag may include the charger anti-counterfeiting identifier and/or the charging optimization parameter.

In another possible design, the first NFC tag is obtained through emulation by an NFC chip.

In another possible design, the first NFC tag is disposed in another electronic device.

According to another aspect, an embodiment of this application provides a data exchange method, which may be applied to a first electronic device that supports a near field communication NFC card reading function. The method includes: The first electronic device sends a first card searching request command. The first electronic device receives a first card searching answer to request command from a first NFC tag, where the first card searching answer to request command is a response of the first NFC tag to the first card searching request command. The first electronic device reads information about the first NFC tag after receiving the first card searching answer to request command from the first NFC tag. After the first electronic device reads the information about the first NFC tag, the first electronic device continues to send a first card searching request command, continues to receive a card searching answer to request command from the first NFC tag, and skips reading the information about the first NFC tag.

According to the method, after the first electronic device continues to receive the first card searching answer to request command, when the first NFC tag is continuously in position, the first electronic device no longer reads the information about the first NFC tag. Therefore, NFC card searching commands including standard card searching commands and private card searching commands can be normally listened to and sent without being continuously in a data reading procedure, and information about other NFC tags can be normally read. In this way, functions such as NFC card reading, card swiping, and P2P can be normally performed. In addition, when the first NFC tag is continuously in position, the first electronic device no longer reads the information about the first NFC tag, which can reduce power consumption of the electronic device. In addition, the first NFC tag makes a response and is activated only based on a private NFC first card searching request command, so that the first electronic device reads information, and a standard NFC card searching request command does not respond to and activate the first NFC tag. Therefore, unnecessary data reading is not easily caused, and on-demand triggering and on-demand data reading can be implemented.

In a possible design, the first electronic device is provided with a first identifier, where the first identifier indicates whether the first electronic device detects the first NFC tag; before the first electronic device receives the first card searching answer to request command from the first NFC tag, a value of the first identifier is a first value, where the first value indicates that the first electronic device does not detect the first NFC tag; and after the first electronic device receives the first card searching answer to request command from the first NFC tag, the first electronic device changes the value of the first identifier from the first value to a second value, where the second value indicates that the first electronic device detects the first NFC tag.

In another possible design, the method further includes: After the first electronic device continues to send the first card searching request command, if the first electronic device does not receive the first card searching answer to request command from the first NFC tag within preset duration, the first electronic device changes the value of the first identifier from the second value to the first value; or if the first electronic device receives the first card searching answer to request command from the first NFC tag within the preset duration, the first electronic device keeps the value of the first identifier as the second value.

In another possible design, the method further includes: The first electronic device increases a time interval for continuing to send the first card searching request command.

In another possible design, after the first electronic device reads the information about the first NFC tag, the method further includes: The first electronic device sends a second card searching request command. If the first electronic device receives a second card searching answer to request command from a second NFC tag, where the second card searching answer to request command is a response of the second NFC tag to the second card searching request command, the first electronic device reads information about the second NFC tag.

In another possible design, after the first electronic device reads the information about the first NFC tag, the method further includes: The first electronic device performs service processing based on the information about the first NFC tag.

In another possible design, that the first electronic device performs service processing based on the information about the first NFC tag includes: The first electronic device charges a second electronic device based on identification information of the second electronic device in the first NFC tag.

In another possible design, that the first electronic device performs service processing based on the information about the first NFC tag includes: The first electronic device switches a theme of the first electronic device based on the information about the first NFC tag.

In another possible design, that the first electronic device performs service processing based on the information about the first NFC tag includes: The first electronic device performs charger anti-counterfeiting check and/or configures a charging parameter based on the information about the first NFC tag.

According to another aspect, an embodiment of this application provides a data exchange apparatus. The apparatus is included in a first electronic device, and the apparatus has a function of implementing behavior of the first electronic device in any one of the foregoing aspects and any one of the possible implementations. The function may be implemented by hardware, or may be implemented by hardware executing corresponding software. The hardware or the software includes one or more modules or units corresponding to the foregoing functions, for example, a sending module or unit, a receiving module or unit, a reading module or unit, and a processing module or unit.

According to another aspect, an embodiment of this application provides an apparatus. The apparatus includes at least one memory and at least one processor. The at least one processor is coupled to the at least one memory, reads instructions in the at least one memory, and enables, according to the instructions, the apparatus to perform the NFC-based data exchange method performed by the first electronic device in any one of the foregoing aspects and any one of the possible implementations. For example, the apparatus may be specifically a chip, a component, or a module.

According to another aspect, an embodiment of this application provides an electronic device, including one or more processors, a memory, and one or more computer programs. The one or more computer programs are stored in the memory, and the one or more computer programs include instructions. When the instructions are executed by the electronic device, the electronic device is enabled to perform the NFC-based data exchange method performed by the first electronic device in any one of the foregoing aspects and any one of the possible implementations.

According to another aspect, an embodiment of this application provides a computer-readable storage medium, including computer instructions. When the computer instructions are run on a first electronic device, the first electronic device is enabled to perform the NFC-based data exchange method in any one of the foregoing aspects and any one of the possible implementations.

According to another aspect, an embodiment of this application provides a computer program product. When the computer program product runs on a computer, the computer is enabled to perform the NFC-based data exchange method performed by the first electronic device in any one of the foregoing aspects and any one of the possible implementations.

According to another aspect, an embodiment of this application provides a data exchange system. The system may include a first electronic device and a first NFC tag. The first electronic device and the first NFC tag may be configured to perform the NFC-based data exchange method in any one of the foregoing aspects and any one of the possible implementations.

For beneficial effect of another aspect, refer to beneficial effect of the method performed by the first electronic device. Details are not described herein again.

### BRIEF DESCRIPTION OF DRAWINGS

FIG. 1A is a schematic diagram of a working mode of an NFC chip according to the conventional technology;
FIG. 1B is a schematic flowchart of processing an NFC tag by an NFC chip according to the conventional technology;
FIG. 1C is a flowchart of command interaction corresponding to a phase 2 and a phase 3 of an NFC chip according to the conventional technology;
FIG. 2A is a schematic diagram of wireless charging according to the conventional technology;
FIG. 2B is a flowchart of wireless charging according to the conventional technology;
FIG. 3 is a schematic diagram of a hardware structure of an electronic device according to an embodiment of this application;
FIG. 4A is a schematic diagram of a working mode of an NFC module according to an embodiment of this application;
FIG. 4B is a schematic diagram of a working mode of another NFC module according to an embodiment of this application;
FIG. 4C is a schematic flowchart of processing a silent tag by an NFC module according to an embodiment of this application;
FIG. 4D is a flowchart of command interaction corresponding to a phase 2 and a phase 3 of an NFC chip according to an embodiment of this application;
FIG. 5 is a flowchart of an NFC-based data exchange method according to an embodiment of this application;
FIG. 6A is a flowchart of another NFC-based data exchange method according to an embodiment of this application;
FIG. 6B is a schematic diagram of switching a customized theme based on NFC according to an embodiment of this application;
FIG. 7A is a flowchart of another NFC-based data exchange method according to an embodiment of this application;
FIG. 7B is a schematic diagram of performing wireless charging based on NFC according to an embodiment of this application;
FIG. 8A is a flowchart of another NFC-based data exchange method according to an embodiment of this application;
FIG. 8B is a schematic diagram of enabling reverse charging based on NFC according to an embodiment of this application;
FIG. 9 is a flowchart of a data exchange method according to an embodiment of this application; and
FIG. 10 is a schematic diagram of a structure of an electronic device according to an embodiment of this application.

### DESCRIPTION OF EMBODIMENTS

For ease of understanding, some concepts related to embodiments of this application are described for reference by using examples. Details are shown as follows:

The following describes technical solutions in embodiments of this application with reference to accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of a number of indicated technical features. Therefore, a feature limited by "first" or "second" may explicitly or implicitly include one or more features. In descriptions of embodiments, unless otherwise specified, "a plurality of" means two or more.

In embodiments of this application, the word "example", "for example", or the like is used to represent giving an example, an illustration, or a description. Any embodiment or design scheme described as "example" or "for example" in embodiments of this application should not be explained as being more preferred or having more advantages than another embodiment or design scheme. Exactly, use of the term "example", "for example", or the like is intended to present a relative concept in a specific manner.

Currently, there are increasing application scenarios of an NFC technology, and more services can be implemented by using the NFC technology. The NFC technology involves an NFC tag (TAG) and an NFC card reader. The NFC tag may also be referred to as an NFC card. The NFC card reader can read information about the NFC tag. In embodiments of this application, a device that supports the NFC card reader may be referred to as a card reader device, and a device that supports the NFC tag may be referred to as a tag device. The card reader device approaches the tag device to implement simple data exchange. On this basis, rich services can be presented, such as tap to transfer audio, tap to project, or tap to transfer picture.

Currently, the NFC technology has problems in an actual application process. For example, because the NFC tag is always in an activated state, when the card reader device approaches the tag device, the card reader device easily reads the information about the NFC tag according to an NFC protocol and an interface. Consequently, unnecessary data reading is caused. When the card reader device and the tag device are always in a close state, the card reader device continuously reads the information about the NFC tag, resulting in high power consumption of the card reader device is caused. In addition, in a process of continuously reading the information about the current NFC tag, the card reader device cannot detect another NFC tag, and cannot exchange data with the another NFC tag. Consequently, a normal NFC function of the card reader device fails or is seriously affected.

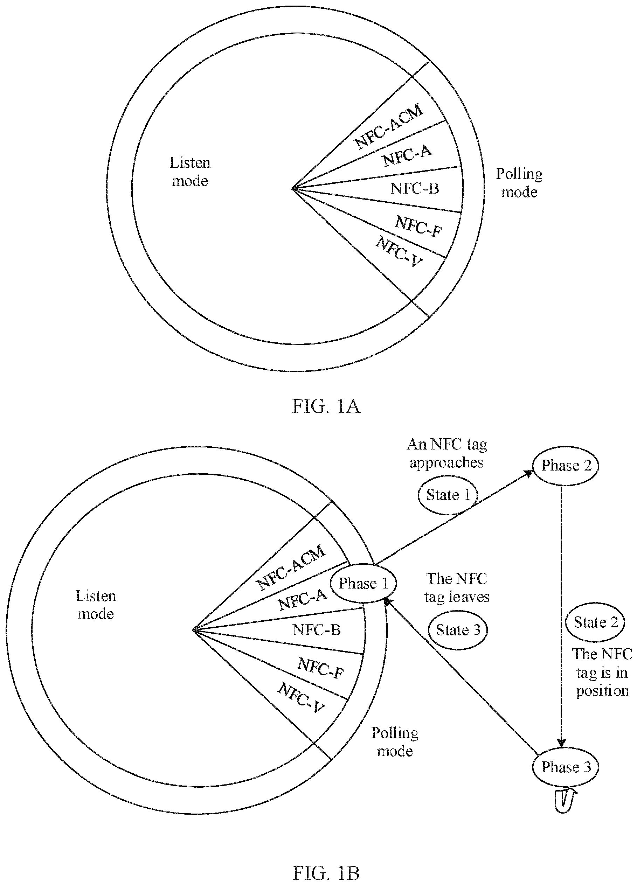

For example, the NFC card reader may be implemented by using an NFC chip. As shown in FIG. 1A, the NFC chip includes two working modes: a listen (listen) mode and a polling (polling) mode. For example, each working period of the NFC chip may include a listen period of about 300 ms (corresponding to the listen mode) and a polling period of about 20 ms (corresponding to the polling mode). The listen mode is a card emulation mode of the NFC chip, and the polling mode includes a point to point (point to point, P2P) mode and a card reader mode of the NFC chip.

The P2P corresponds to an NFC-active control modulation (active control modulation, ACM) working phase, and the card reader mode includes different working phases respectively corresponding to different NFC protocols NFC-A/B/F/V. In the polling mode, the NFC chip sends standard NFC card searching request commands in a polling manner according to the NFC protocols. The standard NFC card searching request commands include a standard card searching request command corresponding to each working phase, for example, include a card searching request command (used to find a peer device in the P2P mode for data exchange) corresponding to the NFC-ACM, and card searching request commands REQ-A/B/F/V (used to find NFC tags corresponding to the NFC-A/B/F/V) respectively corresponding to the different NFC protocols NFC-A/B/F/V. It may be understood that duration of each working period of the NFC chip, duration of each working mode in each working period, a working phase included in each working mode, duration of each working phase, and a type and a period of a sent card searching request command may be preset, or may be adjusted based on a requirement.

FIG. 1B is a schematic flowchart of processing an NFC tag (namely, a type A (type A) NFC tag) corresponding to the protocol NFC-A by the NFC chip. Procedures of processing type B/F/V NFC tags corresponding to other NFC protocols such as NFC-B/F/V by the NFC chip is similar to a procedure of processing the type A NFC tag, and is not described one by one.

As shown in FIG. 1B, the processing procedure provides description that a process in which the NFC chip in the card reader device interacts with a first NFC tag includes the following three phases (a phase 1 to a phase 3) and three states (a state 1 to a state 3). It may be understood that the process of interaction between the NFC chip and the first NFC tag is a process of interaction between the card reader device in which the NFC chip is located and the tag device in which the first NFC tag is located.

State switching shown in FIG. 1B is described as follows:
State 1: The first NFC tag approaches the card reader device, and the NFC chip enters the phase 2 from the phase 1.
State 2: The first NFC tag continuously approaches the card reader device without leaving, and the NFC chip enters the phase 3 from the phase 2.
State 3: The first NFC tag leaves the card reader device, and the NFC chip enters the phase 1 from the phase 3.

The phases shown in FIG. 1B are described as follows:
Phase 1: The first NFC tag does not approach the card reader device, and the NFC chip in the card reader device separately enters the listen mode and the polling mode based on a preset working period. In the polling mode, polling (polling) signals are normally sent to the outside based on a polling period, and the polling signals include the standard NFC card searching request commands. The standard NFC card searching request commands are general card searching request commands specified in the NFC protocols. The standard NFC card searching request commands include standard card searching request commands respectively corresponding to different working phases in the polling mode. For example, in each polling period, the NFC chip separately sends a standard card searching request command corresponding to the NFC-ACM, a standard card searching request command corresponding to the NFC-A, a standard card searching request command corresponding to the NFC-B, a standard card searching request command corresponding to the NFC-F, and a standard card searching request command corresponding to the NFC-V. It may be understood that the polling mode of the NFC chip may further include a working phase corresponding to another NFC protocol, and the NFC chip may further send, in the polling period, a standard card searching request command corresponding to the another NFC protocol. This is not limited.
Phase 2: The first NFC tag approaches the card reader device, the NFC chip in the card reader device and the first NFC tag perform radio-frequency activation, and the NFC chip reads the first NFC tag based on an NFC-A protocol procedure.
Phase 3: The first NFC tag continuously approaches the card reader device, and this phase is always in a card in-position detection procedure.

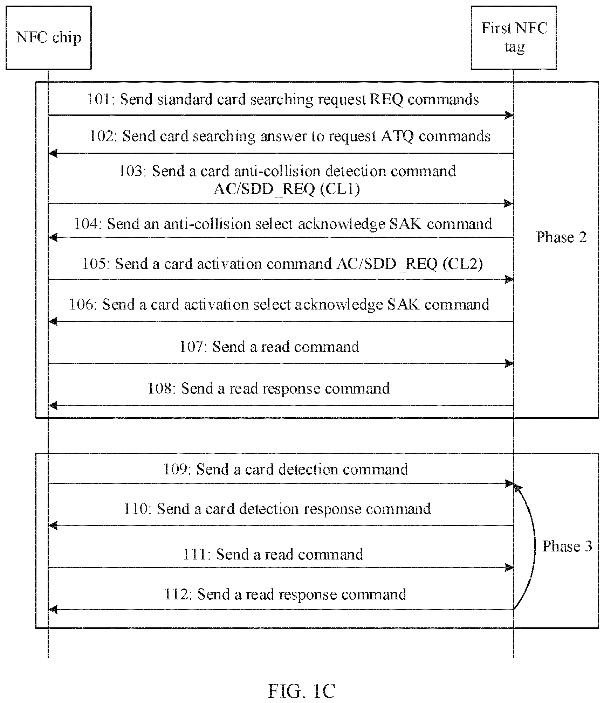

Refer to FIG. 1C. A command interaction procedure corresponding to the phase 2 shown in FIG. 1B includes the following steps.

101: The NFC chip sends standard card searching request (request, REQ) commands.

The standard card searching request REQ commands are commands specified in the NFC protocols, and are used to detect NFC tags. Different NFC protocols correspond to different card searching request commands, for example, standard card searching request commands such as REQ-A/B/F/V may be included. The NFC chip of the card reader device may periodically send the different standard card searching request commands such as REQ-A/B/F/V in a polling manner by using radio frequency signals, to detect whether various NFC tags approach.

102: After receiving the card searching request REQ commands, the first NFC tag sends card searching answer to request (answer to request, ATQ) commands to the NFC chip.

After the first NFC tag approaches the card reader device, the first NFC tag can receive the standard card searching request REQ commands within an NFC radio frequency signal communication range with the NFC chip, and send the card searching answer to request ATQ commands to the NFC chip.

After receiving the card searching answer to request ATQ commands sent by the first NFC tag, the NFC chip determines that the first NFC tag is in-position.

An in-position status of the first NFC tag includes "in-position" or "not-in-position". "In-position" means that the card reader device is close to the NFC tag, and within the NFC radio frequency communication range, the NFC chip may detect the NFC tag and the NFC tag may be found by the NFC chip. "Not-in-position" means that the card reader device is far away from the NFC tag, and the NFC chip cannot detect the NFC tag.

103: The NFC chip sends a card anti-collision detection command AC/SDD_REQ (CL1).

The command is used to determine, when the NFC chip detects a plurality of NFC tags (in other words, the plurality of NFC tags are in-position), an NFC tag with which data is exchanged, to read information about the NFC tag. CL1 indicates that a cascade level (cascade level) of the Type A is 1.

104: After receiving the anti-collision detection command AC/SDD_REQ (CL1), the first NFC tag sends an anti-collision select acknowledge (select acknowledge, SAK) command to the NFC chip.

105: The NFC chip sends a card activation command AC/SDD _REQ (CL2).

The card activation command is generated according to the anti-collision select acknowledge command received by the NFC chip, and is used to determine which NFC tag is activated in this communication. For example, the card activation command instructs to activate the first NFC tag. CL2 indicates that the cascade level of the Type A is 2.

106: After receiving the card activation command AC/SDD _REQ (CL2), the first NFC tag sends a card activation select acknowledge SAK command to the NFC chip.

107: The NFC chip sends a read command (Read command, Read CMD) to the first NFC tag.

After receiving the card activation select acknowledge command, the NFC chip sends the read command Read CMD to the activated first NFC tag, where the command is used to read information about the first NFC tag.

108: After receiving the read command Read CMD, the first NFC tag sends a read response Read RSP command to the NFC chip.

After receiving the read command Read CMD, the activated first NFC tag sends the read response Read RSP command to the NFC chip, where the read response Read RSP command carries the information about the first NFC tag. In this way, the NFC chip reads the information about the first NFC tag.

In some technical solutions, refer to FIG. 1C. A command interaction procedure corresponding to the phase 3 shown in FIG. 1B includes the following steps.

109: The NFC chip sends a card detection command to the first NFC tag.

The card detection command is used to detect whether the first NFC tag is continuously in position.

110: After receiving the card detection command, the first NFC tag sends a card detection response command to the NFC chip.

111: After receiving the card detection response command, the NFC chip sends a read command Read CMD to the first NFC tag.

After receiving the card detection response command sent by the first NFC, the NFC chip determines that the first NFC tag is continuously in position (in other words, the first NFC tag and the card reader device are in a continuously close state). Therefore, the read command is sent to the first NFC tag, to read the information about the first NFC tag again, so as to perform a data reading procedure again.

112: After receiving the read command Read CMD, the NFC tag sends a read response Read RSP command.

In the phase 3, the first NFC tag is in an active mode, the first NFC tag and the card reader device are always in a close state, in other words, the first NFC is continuously in position, and the NFC chip and the first NFC tag cyclically perform steps 109 to 112. Therefore, the NFC chip continuously reads the information about the first NFC tag, resulting in high power consumption of the NFC chip.

In some other technical solutions, in the phase 3 shown in FIG. 1B, the NFC chip triggers a reset (reset) command, to repeatedly perform the foregoing steps 101 to 108 with the first NFC tag, and the NFC chip continuously reads the information about the first NFC tag for a plurality of times, resulting in high power consumption of the NFC chip.

In addition, if the first NFC tag is continuously in position, the NFC chip is always in a card in-position detection process or keeps reading the information about the first NFC tag, and cannot enter the listen mode and the polling mode in the phase 1. Therefore, the NFC chip cannot find the another NFC tag and perform data exchange, and cannot normally perform functions such as NFC card swiping, card reading, or P2P interaction. An NFC function of the NFC chip fails or is seriously affected.

The foregoing NFC tag may be understood as a conventional NFC tag, and may be referred to as a general NFC tag, a general NFC card, a standard NFC tag, or the like. Different from the general NFC tag, there is still a silent NFC tag at present, which may also be referred to as a silent NFC card, a private NFC card, or the like. The silent tag is in a silent state by default, and the silent tag makes a response only after a specific private NFC card searching request command is received, so that the card reader device can read information about the silent tag. When the card reader device sends standard NFC card searching request commands according to the NFC protocols, the silent tag does not make a response, and the card reader device cannot read the information about the silent tag.

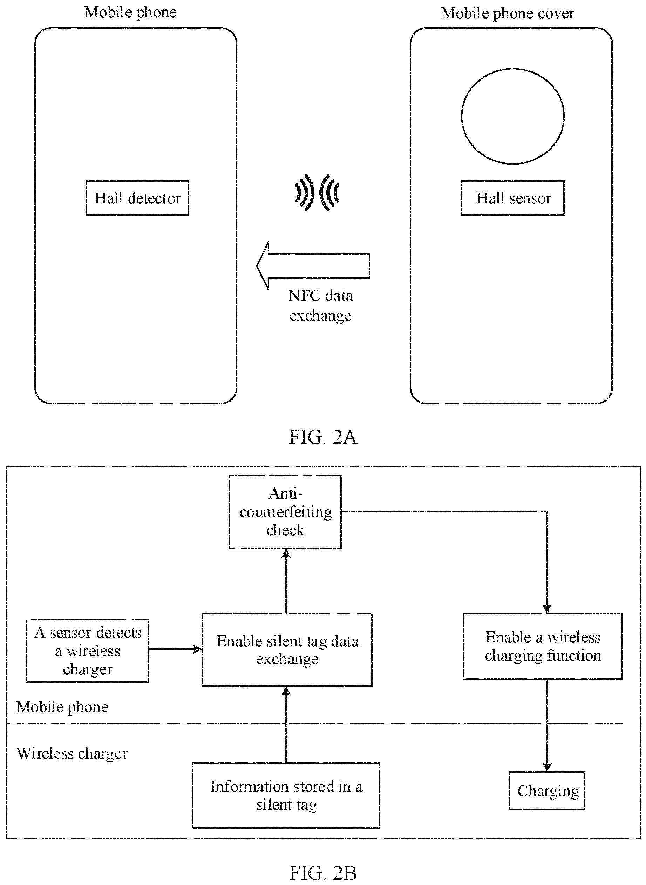

In a technical solution, NFC data exchange may be implemented by cooperating with trigger components such as a Hall sensor and the silent tag. For example, refer to FIG. 2A. The card reader device is a mobile phone, and the tag device is a mobile phone cover. The silent tag is in the silent state by default. When the mobile phone sends a standard NFC command, the silent tag does not make a response. When the mobile phone cover is sleeved on the mobile phone, a Hall sensor is triggered to work. When the Hall detector of the mobile phone detects the mobile phone cover, the Hall detector starts the mobile phone to send a private NFC card searching request command and a read command to exchange data with the silent tag. After the data exchange is complete or the mobile phone cover is removed, the mobile phone stops sending a private card searching request command and a read command, and ends a reading procedure of the silent tag.

For another example, refer to FIG. 2B. The card reader device is a mobile phone, and the tag device is a wireless charger. When the wireless charger approaches the mobile phone, a magnet of the wireless charger is attached to the mobile phone. The mobile phone detects that the wireless charger is in a correct charging location by using a Hall sensor. The Hall sensor transfers a detection result to the NFC chip, and the NFC chip sets a related chip state, starts a silent tag sending procedure, and sends a private card searching request command and a read command. After reading the information about the silent tag, the mobile phone stops sending a private card searching request command and a read command, and ends a reading procedure of the silent tag. The NFC chip sends read information to a charging anti-counterfeiting module, parses a device identifier, checks an anti-counterfeiting identifier, and enables a wireless charging function after the check succeeds. If the wireless charger is removed and is in the reading procedure of the silent tag, the reading procedure of the silent tag is ended.

In the solutions shown in FIG. 2A and FIG. 2B, the Hall sensor needs to be used, and both the card reader device and the tag device need to support a sensor function, which imposes restrictions on hardware designs of the card reader device and the tag device. Therefore, application scenarios are limited, hardware costs are high, and hardware designs are complex. In addition, this solution involves interaction between a plurality of modules. Therefore, an implementation process is complex, there are many constraints, real-time performance is poor, and universality is not achieved.

An embodiment of this application provides an NFC-based data exchange method, which may be applied to data exchange between an NFC card reader device and a tag device. The card reader device supports an NFC card reader function, and the tag device supports a silent tag function. The card reader device may read information about the silent tag according to a private NFC card searching request command. In this way, the tag device makes a response and is activated only based on the private NFC card searching request command, which does not easily cause unnecessary data reading, and can implement on-demand triggering and on-demand data reading.

The card reader device may read the information about the silent tag after the silent tag is switched from "not-in-position" to "in-position". Alternatively, after reading the information about the silent tag, the card reader device may switch the silent tag from "not-in-position" to "in-position". A sequence of switching an in-position status and reading the information is not limited in this embodiment of this application.

The card reader device stops a data reading procedure after the information about the silent tag is read. Even if the tag device is always in position, the card reader device does not read the information about the silent tag again. In this way, power consumption caused by continuously reading the information about the silent tag by the card reader device can be reduced.

In addition, after the information about the silent tag is read, the card reader device enters a listen mode and a polling mode in a phase 1 based on a working period, so that NFC card searching request commands may be sent in a polling manner, including standard NFC card searching request commands and private NFC card searching request commands, to identify other NFC tags and exchange data. In this way, even if the tag device is always in position, the card reader device can read information about the other NFC tags, an NFC function of the card reader device does not fail or is affected, and functions such as NFC card swiping, card reading, or P2P interaction can be normally performed.

In addition, the solution provided in this embodiment of this application achieves the foregoing objective by using an NFC protocol interaction procedure. An implementation procedure is simple, has high real-time performance, has universality, and has a wide application scope. In addition, additional components such as a Hall sensor are not required, so that hardware space of the card reader device and the tag device can be saved, a hardware design can be simplified, and device costs can be reduced.

The card reader device in this embodiment of this application may be an electronic device with an NFC tag reading function, for example, a mobile phone, a tablet computer, a wearable device, a smart home device, an in-vehicle device, an augmented reality (augmented reality, AR)/virtual reality (virtual reality, VR) device, a laptop computer, an ultra-mobile personal computer (ultra-mobile personal computer, UMPC), a netbook, a personal digital assistant (personal digital assistant, PDA), a point of sales (Point of sales, POS) machine, or an intelligent lock. A specific device type of the card reader device is not limited in this embodiment of this application.

The silent tag in this embodiment of this application may be an active tag, a passive tag, or a tag emulated by an NFC chip. This is not limited. The tag device has a silent tag. For example, the tag device may be a device such as a mobile phone cover, a wireless charger, a smart watch, an access card, a mobile phone, a tablet computer, a wearable device, or an in-vehicle device. In addition, if the silent tag is not integrated into another device, the silent tag may also be referred to as a tag device.

Some electronic devices may be card reader devices, or may be tag devices. When the electronic device is a card reader device, the electronic device supports at least an NFC card reader function, and may further support a universal NFC tag function or a silent tag function. When the electronic device is a tag device, the electronic device supports at least a silent NFC tag function, and may further support a general NFC tag function.

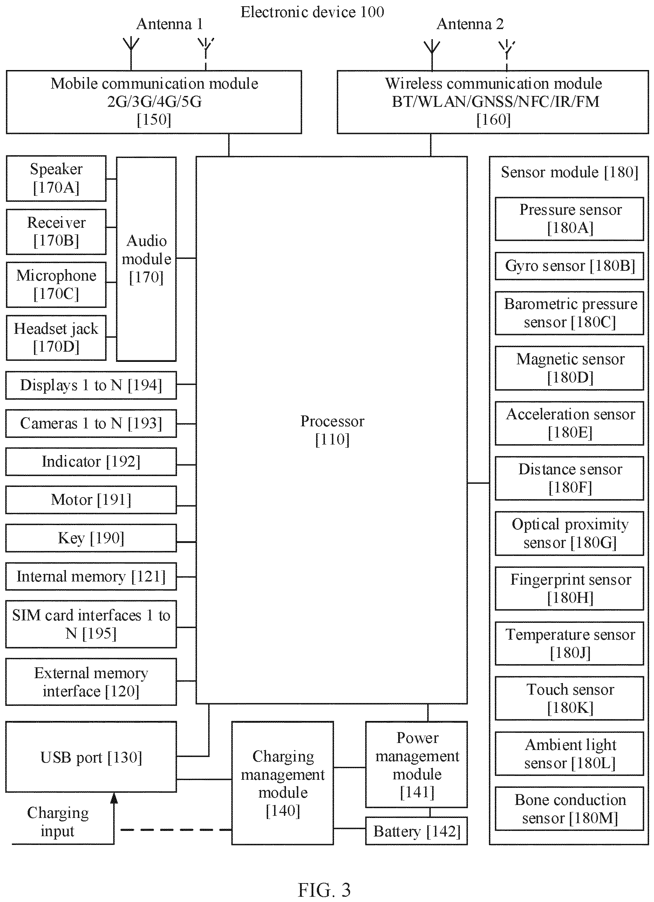

For example, FIG. 3 is a schematic diagram of a structure of an electronic device 100. The electronic device 100 may be a card reader device, or may be a tag device. The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, aheadsetjack 170D, a sensor module 180, a key 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory , a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

The charging management module 140 is configured to receive a charging input from a charger. The charger may be a wireless charger, or may be a wired charger. In some embodiments of wired charging, the charging management module 140 may receive a charging input of a wired charger through the USB port 130. In some embodiments of wireless charging, the charging management module 140 may receive a wireless charging input through a wireless charging coil of the electronic device 100. When charging the battery 142, the charging management module 140 may further supply power to the electronic device through the power management module 141.

The power management module 141 is configured to connect the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery state of health (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The wireless communication module 160 may provide a wireless communication solution that is applied to the electronic device 100, and that includes the wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, the antenna 1 of the electronic device 100 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

In some embodiments of this application, the wireless communication module 160 includes an NFC module. The NFC module may be an NFC chip, an integrated circuit, a combination of a circuit and a component, or the like. This is not limited. The NFC module has an NFC card reader function and/or a card emulation function. When the electronic device 110 is a card reader device, the NFC module has at least the NFC card reader function. When the electronic device is a tag device, the NFC module has at least the card emulation function, and can emulate a silent NFC tag function.

Specifically, when the electronic device 100 is a card reader device having an NFC module, the NFC module has a tag read/write function, has a sending port and a receiving port, has signal sending and receiving capabilities, and can control sending of standard card searching request commands and a private card searching request command based on a configuration parameter of the processor 110. After the NFC module determines, by using the private card searching request command, that the tag device is switched from "not-in-position" to "in-position", the NFC module may read the information about the silent tag in the tag device, to determine, based on the information, whether the tag device supports wireless charging, obtain an anti-counterfeiting identifier of the tag device, obtain an optimization parameter of wireless charging, or obtain information such as customized theme information. Then, even if the silent tag is continuously in position, the NFC module stops reading the information about the silent tag. The NFC module may further increase an interval of sending private card searching request commands after tag data reading is complete.

When the electronic device 100 is a tag device, the electronic device 100 may have an NFC module, and the NFC module may emulate a silent tag. Alternatively, the electronic device 100 may have the silent tag without including the NFC module. Preset information is written into the silent tag, for example, customized theme information, whether wireless charging is supported, an anti-counterfeiting identifier, or a charging optimization parameter. The silent tag is in a silent state by default. After a private NFC card searching request command is detected, the silent tag is activated and the card reader device is allowed to read the information.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. For example, the display 194 may display a customized theme or information related to wireless charging. The display 194 includes a display panel. The display panel may be a liquid cry stal display (liquid cry stal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1. The electronic device 100 may implement a photographing function through the ISP, the camera 193, the video codec, the GPU, the display 194, the application processor, and the like.

The internal memory 121 may be configured to store computer-executable program code. The executable program code includes instructions. The processor 110 executes various functional applications and data processing of the electronic device 100 by running the instructions stored in the internal memory 121. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, and may further include a non-volatile memory, for example, at least one magnetic disk storage device, a flash memory, or a universal flash storage (universal flash storage, UFS).

In some embodiments, the processor 110 performs service processing by running the instructions stored in the internal memory 121, can perform data communication with the NFC module or with the silent tag, and can determine, based on an event reported by the NFC module, whether to send a private card searching request command.

The magnetic sensor 180D includes a Hall sensor. The electronic device 100 may detect opening and closing of a leather case of a flip cover through the magnetic sensor 180D. In some embodiments, when the electronic device 100 is a clamshell phone, the electronic device 100 may detect opening and closing of a flip cover through the magnetic sensor 180D. Further, a feature such as automatic unlocking of the flip cover is set based on a detected opening or closing state of the leather case or a detected opening or closing state of the flip cover. In some embodiments, the Hall sensor may be configured to detect whether an NFC tag approaches.

The touch sensor 180K is also referred to as a "touch panel". The touch sensor 180K may be disposed on the display 194, and the touch sensor 180K and the display 194 constitute a touch screen, which is also referred to as a "touchscreen". The touch sensor 180K is configured to detect a touch operation performed on or near the touch sensor. The touch sensor may transfer the detected touch operation to the application processor to determine a type of a touch event. The display 194 may provide a visual output related to the touch operation. In some other embodiments, the touch sensor 180K may alternatively be disposed on a surface of the electronic device 100, and a location of the touch sensor 180K is different from that of the display 194.

It may be understood that an example structure in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

In addition, when the electronic device 100 is a card reader device or a tag device, the electronic device 100 may include more or fewer components than those shown in the figure, or combine some components, or split some components, or have different component arrangements.

In this embodiment of this application, when the electronic device 100 is the card reader device, the processor 110 runs the instructions stored in the internal memory 121, so that the NFC module can send a private NFC card searching request command, to find the silent tag and read the information about the silent tag in the tag device. In this way, the tag device makes a response and is activated only based on the private NFC card searching request command, which does not easily cause unnecessary data reading, and can implement on-demand triggering and on-demand data reading. In addition, after the information about the silent tag is read, even if the tag device is always in position, the card reader device does not read the information about the silent tag again. In this way, power consumption caused by continuous data reading can be reduced. In addition, after completing reading of the information about the silent tag, the card reader device may enter a listen mode and a polling mode in a phase 1 based on a working period, and send NFC card searching request commands in a polling manner, including standard card searching request commands and a private card searching request command, to identify and read information about other NFC tags. Therefore, even if the tag device is always in position, the card reader device can read the information about the other NFC tags, and an NFC function of the card reader device does not fail or is affected. The display 194 may display the customized theme or information related to wireless charging.

When the electronic device 100 is the tag device, the preset information is written into the silent tag, for example, the customized theme information, whether wireless charging is supported, the anti-counterfeiting identifier, or the charging optimization parameter. The processor 110 runs the instructions stored in the internal memory 121, so that the silent tag is in the silent state by default. After detecting the private NFC card searching request command, the silent tag is activated and the card reader device is allowed to read the information.

In the NFC-based data exchange method provided in this embodiment of this application, an NFC module in the card reader device adjusts an existing polling mode, and sending of the private card searching request command is added in a polling period of the polling mode, to find the silent tag. In this way, the information about the silent tag is read. After reading the information about the silent tag is complete, the NFC module stops the data reading procedure, enters the listen mode and the polling mode in the phase 1 based on the working period, and sends the NFC card searching request commands (including the standard card searching request commands and the private card searching request command) in the polling manner, so that power consumption of the NFC module is low when the silent tag is continuously in position, and the card reader device may also read the information about the other NFC tags. In this way, a normal read/write function of the NFC module is not affected, and functions such as NFC card swiping, card reading, and P2P interaction can be normally performed.

In some embodiments, the NFC module may implement data exchange with the silent tag in combination with an in-position flag corresponding to the silent tag. For example, in some technical solutions, a new configuration attribute may be added to a processor of the card reader device. The configuration attribute may be referred to as the in-position flag, and indicates whether the silent tag is in position. The configuration attribute may be configured as a first state or a second state. The configuration attribute may be configured as the first state by default. The in-position identifier may be a first identifier, and the first identifier indicates whether the NFC module detects the silent tag. The first identifier may include a first value and a second value, respectively corresponding to the first state and the second state. If no silent tag is detected, the silent tag is not in position, and the first identifier is set to the first value; or if the silent tag is detected, the silent tag is in position, and the first identifier is set to the second value.

Each private card searching request command may correspond to one in-position flag, to indicate whether a silent tag that can respond to the private card searching request command is in position. The in-position flag is combined with the private card searching request command, so that when the silent tag is continuously in position, power consumption of the NFC module is low and functions of the NFC are normal.

In addition, the processor of the card reader device may further configure a register of the NFC module by delivering an NFC controller interface (NFC controller interface, NCI) command, to control types and periods of the sent standard NFC card searching request commands and private NFC card searching request command.

In some other technical solutions, the in-position flag may alternatively be disposed in the NFC module. A specific location of the in-position flag is not limited in this embodiment of this application.

Based on improvement of the NFC module, the following describes an NFC-based data exchange procedure.

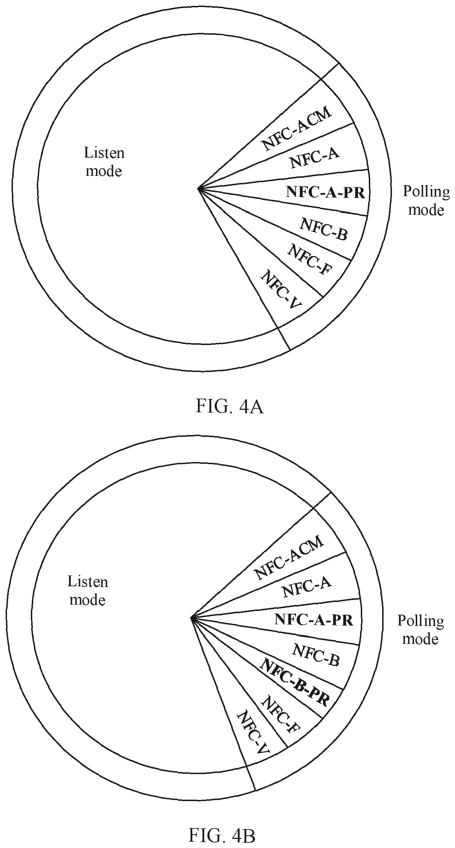

For example, FIG. 4A is a schematic diagram of a working mode in which the NFC module adds an NFC-A-PR working phase in a polling period based on an NFC-A protocol and that is obtained after a private NFC card searching request command REQ-A-PR corresponding to the NFC-A-PR is added to NFC card searching request commands in the polling period. REQ-A-PR is a customized private card searching request command. Only a type A silent tag can respond to this command, and a general NFC tag cannot respond to this command. In addition, the REQ-A-PR is merely a representation manner of the private card searching request command provided in this embodiment of this application, and may alternatively use another representation manner or name. This is not limited.

It should be noted that the method provided in this embodiment of this application is not limited to adding the private card searching request command corresponding to the NFC-A protocol, and may further add a private card searching request command corresponding to NFC-B/F/V or another NFC protocol. This is not limited. For example, FIG. 4B is a schematic diagram of a working mode obtained after the NFC module further adds a private card searching request command REQ-B-PR corresponding to an NFC-B-PR working phase in the polling period based on the NFC-B protocol. It may be understood that there may be one or more private card searching request commands corresponding to each NFC protocol (for example, the NFC-A protocol). This is not limited. The following uses the private card searching request command corresponding to the NFC-A protocol as an example for description.

Logic for determining whether the silent tag is in position includes:
"In-position" determining: After sending the REQ-A-PR command, the NFC module in the card reader device receives a private card searching answer to request ATQ-A-PR command sent by the silent tag, and the NFC module reports a tag in-position event, and determines that the tag is in position.
"Not-in-position" determining: After the NFC module sends the REQ-A-PR command, if the NFC module does not receive a private card searching answer to request command within first preset duration, the NFC module reports a tag not-in-position event, and determines that the tag is not in position.

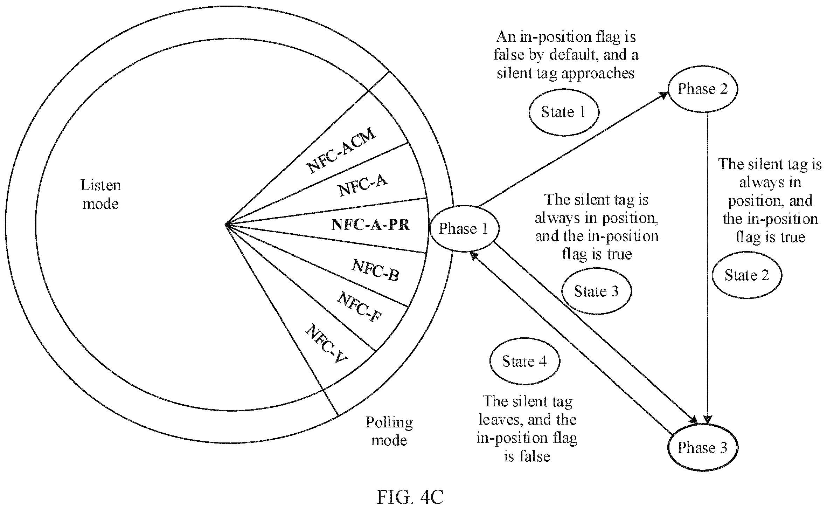

Refer to FIG. 4C. Configuration and change logic of the in-position flag corresponding to the silent tag includes:
In-position flag switching logic 1: The silent tag does not approach the card reader device, and the in-position flag corresponding to the silent tag is in the first state, for example, the first state is false.

In-position flag switching logic 2: The silent tag switches from not approaching the silent tag to approaching the card reader device. After information about the silent tag is read, the in-position flag corresponding to the silent tag is switched to the second state, for example, the second state is true (true).

In-position flag switching logic 3: The silent tag is always in a state close to the card reader device, and the in-position flag corresponding to the silent tag remains true.

In-position flag switching logic 4: The silent tag switches from approaching the card reader device to being far away from the card reader device, and the in-position flag corresponding to the silent tag is switched to false.

FIG. 4C is a schematic flowchart of processing the type A silent tag for the NFC-A protocol by the NFC module in this embodiment of this application. Procedures in which the NFC module processes silent tags corresponding to protocols such as NFC-B/F/V is similar to a procedure of processing the type A silent tag, and are not described one by one.

As shown in FIG. 4C, the processing procedure provides description that a process in which the NFC module interacts with a first silent tag includes the following four states (a state 1 to a state 4) and three phases (a phase 1 to a phase 3).

The states shown in FIG. 4C are described as follows:
State 1: When the first silent tag does not approach the card reader device, an in-position flag corresponding to the first silent tag in the card reader device is false. The in-position flag corresponding to the first silent tag is an in-position flag corresponding to a first private card searching request command to which the first silent tag can respond. When the first silent tag approaches the card reader device from a remote place, the NFC module sends the private card searching request command REQ-A-PR. After receiving a private card searching answer to request ATQ-A-PR command from the first silent tag, the NFC module starts a reading procedure of the first silent tag.
State 2: The first silent tag approaches the card reader device, and the card reader device reads information about the first silent tag. After the first silent tag is switched from "not-in-position" to "in-position", the card reader device reads the information about the silent tag. Alternatively, after the card reader device reads the information about the silent tag, the first silent tag is switched from "not-in-position" to "in-position". This is not limited. Corresponding to switching the first silent tag to "in-position", the in-position flag corresponding to the first silent tag is set to true. After reading of the information about the first silent tag is complete, the NFC module ends the data reading procedure of the first silent tag. When the NFC module continuously receives private card searching answer to request commands from the first silent tag, the first silent tag is continuously in position.
State 3: Consistent with the state 2, the NFC module enters a polling state of the phase 1 from the phase 3. The NFC module enters the listen mode and the polling mode in the phase 1 based on a working period, and sends the NFC card searching request commands in the polling manner, including the standard card searching request commands and the private card searching request commands.
State 4: The first silent tag is far away from the card reader device, the NFC module cannot receive the private card searching answer to request command of the first silent tag, and the in-position flag corresponding to the first silent tag is set to false. The NFC module enters the polling state of the phase 1 from the phase 3. The NFC module enters the listen mode and the polling mode in the phase 1 based on a working period, and sends the NFC card searching request commands in the polling manner, including the standard card searching request commands and the private card searching request commands.

The phases shown in FIG. 4C are described as follows:
Phase 1: Indicates a polling state of the NFC module. The NFC module enters the listen mode and the polling mode in the phase 1 based on the working period, and sends the standard card searching request commands and the private card searching request commands in the polling manner, including the private card searching request command REQ-A-PR. When the first silent tag does not approach the card reader device, the in-position flag corresponding to the first silent tag in the card reader device is false.
Phase 2: The first silent tag approaches the card reader device, the NFC module and the first silent tag perform radio frequency activation. After receiving the private card searching request command REQ-A-PR, the first silent tag sends the private card searching answer to request command ATQA-A-PR. The NFC module determines that the first silent tag is not in position previously on a basis that the in-position flag is false, and may determine, according to the private card searching answer to request command, that the first silent tag is switched from a not-in-position state to an in-position state. In this case, the NFC module initiates the data reading procedure of the first silent tag.

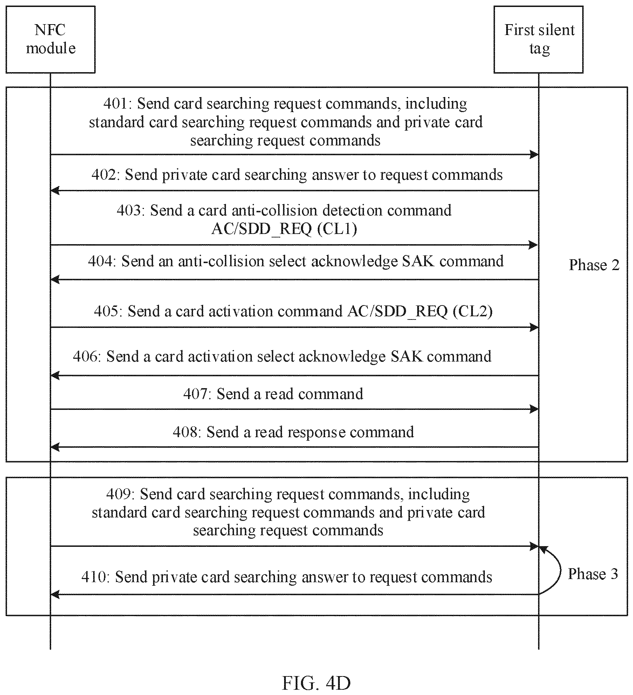

Refer to FIG. 4D. The reading procedure of the first silent tag in the phase 2 includes the following steps.

401: The NFC module sends card searching request commands, including standard card searching request commands and private card searching request commands.

The private card searching request command is used to detect a silent tag. Different NFC protocols correspond to different card searching request commands such as REQ-A/B/F/V. For example, the type A protocol corresponds to the private card searching request command REQ-A-PR. The NFC module of the card reader device may periodically send various standard card searching request commands and various private card searching request commands such as REQ-A/B/F/V in a polling manner by using radio frequency signals, where the private card searching request commands include the REQ-A-PR, to detect whether there are general NFC tags or silent tags corresponding to various NFC protocols.

402: After receiving the private card searching request commands, the first silent tag sends private card searching answer to request commands to the NFC module.

When the first silent tag of the type A does not approach the NFC module, the in-position flag corresponding to the private card searching request command to which the first silent tag can respond is false, in other words, the in-position flag corresponding to the first silent tag is false.

After the first silent tag approaches the NFC module, the private card searching request commands such as the REQ-A-PR can be received within an NFC radio frequency communication range, and therefore the private card searching answer to request commands such as the ATQ-A-PR can be sent to the NFC module.

The NFC module may determine that the first silent tag is not in position previously on the basis that the in-position flag is false. In this case, after receiving the private card searching answer to request commands sent by the first silent tag, the NFC module initiates the data reading procedure of the first silent tag.

In addition, after receiving the private card searching answer to request command sent by the first silent tag, the NFC module may switch the first silent tag from "not-in-position" to "in-position", and the in-position flag corresponding to the first silent tag is set to true.

403: The NFC module sends a card anti-collision detection command AC/SDD_REQ (CL1).

404: After receiving the anti-collision detection command AC/SDD _REQ (CL1), the first silent tag sends an anti-collision select acknowledge command.

405: The NFC module sends a card activation command AC/SDD _REQ (CL2).

406: After receiving the card activation command AC/SDD _REQ (CL2), the first silent tag sends a card activation select acknowledge SAK command.

407: The NFC module sends a read command Read CMD to the first silent tag.

408: After receiving the read command Read CMD, the first silent tag sends a read response Read RSP command.

For descriptions of steps 403 to 408, refer to the related descriptions of steps 103 to 108. Details are not described herein again.

In some embodiments, after receiving the private card searching answer to request command sent by the first silent tag, the NFC module may first switch the first silent tag from "not-in-position" to "in-position", and then read the information about the first silent tag. Alternatively, the NFC module may first read the information about the first silent tag, and then switch the first silent tag from "not-in-position" to "in-position". This is not limited.

The phase 3 shown in FIG. 4C is described as follows:
Phase 3: In this phase, after reading of the information about the first silent tag is complete, REQ-A-PR single-command communication is performed, and the information about the first silent tag is not read again. Refer to FIG. 4D. A command interaction procedure in the phase 3 includes steps 409 and 410 that are cyclically performed.

409: The NFC module sends card searching request commands, including standard card searching request commands and private card searching request commands.

410: After receiving the private card searching request commands, the first silent tag sends private card searching answer to request commands to the NFC module.

After reading the information about the first silent tag, the NFC module closes the reading procedure of the first silent tag, and does not repeatedly send a read command as in the conventional technology. Therefore, the reading procedure of the first silent tag is no longer performed, thereby reducing power consumption of the card reader device.

In the phase 3, after reading of the information about the first silent tag is complete, the NFC module sends a private card searching request command, to determine, based on whether a card searching answer to request command is received, whether the first silent tag is continuously in position. If the NFC module receives the private card searching answer to request command of the first silent tag, and the in-position flag corresponding to the first silent tag is true, it is determined that the first silent tag is continuously in position instead of switching from the not-in-position state to the in-position state, and the NFC module has read the information about the first silent tag. Therefore, the NFC module no longer performs the data reading procedure of the first silent tag, and the in-position flag corresponding to the first silent tag remains true. The NFC module continues to send a private card searching request command, to continue to detect whether the first silent tag is continuously in position. In other words, when the first silent tag is continuously in position, the NFC module may continuously send private card searching request commands instead of sending a read command, and the NFC module and the first silent tag continuously perform procedures of answering the private card searching request commands.

If the NFC module does not receive, within the first preset duration, the private card searching answer to request command from the first silent tag, and the first silent tag does not make a response within a timeout period, it is determined that the first silent tag is not in position, the NFC module reports a first silent tag leaving event, and the in-position flag corresponding to the first silent tag is set to false.

Specifically, when the first silent tag is always in position, the NFC module may enter the listen mode and the polling mode in the phase 1 based on the working period, and periodically send the card searching request commands in the polling manner, including the standard card searching request commands and the private card searching request commands. It may also be understood that the NFC module enters the polling state in the phase 1 at this case. After detecting another NFC tag by using a card searching request command, the NFC module may interact with the another NFC tag, to read information about the another NFC tag. In this way, when the first silent tag is continuously in position (also referred to as always in position), the NFC function of the card reader device is not affected, and the functions such as NFC card swiping, card reading, or P2P interaction can be normally performed. For example, when a mobile phone approaches a wireless charger for wireless charging, the mobile phone may further be tapped against a laptop computer to transfer a picture, perform POS machine card swiping, or the like.

In some embodiments, after reading of the information about the first silent tag is complete, an interval at which the NFC module of the card reader device sends the private card searching request commands corresponding to the first silent tag may be adjusted. In some embodiments, after reading of the information about the first silent tag is complete, the NFC module may not frequently detect, in real time by using private card searching request commands, whether the first silent tag is continuously in position. Therefore, the interval of sending the private card searching request commands may be increased, to reduce power consumption of the NFC module.

In some technical solutions, when the first silent tag is continuously in position, the NFC module may increase the interval of sending the private card searching request commands after duration in which the first silent tag is continuously in position is greater than or equal to second preset duration. In some other technical solutions, when the first silent tag is continuously in position, the NFC module may increase the interval of sending the private card searching request commands after a quantity of times of receiving private card searching answer to request commands is greater than or equal to a preset quantity of times.

In some other technical solutions, when the first silent tag is continuously in position, the interval of sending the private card searching request commands may gradually increase as in-position duration increases. For example, when the card reader device approaches the tag device, a user may not quickly adjust locations of the card reader device and the tag device (for example, the user does not put the wireless charger on the mobile phone at once). A relative location between the card reader device and the tag device continues to change. After the NFC module just reads the information about the first silent tag, the relative location between the card reader device and the tag device may change, and the card reader device and the tag device may perform switching between "in-position" and "not-in-position". In this case, the interval of sending the private card searching request commands may not be excessively large, so that the in-position status of the tag device can be determined in time by using the private card searching request commands, and corresponding processing can be performed. After the NFC module reads the information about the first silent tag for a long time, a relative status between the card reader device and the tag device is basically stable. If the in-position status of the tag device changes, it is likely that the user explicitly wants to separate the card reader device from the tag device (for example, the user wants to remove the wireless charger from the mobile phone). Therefore, even if the NFC module detects, by using private card searching request commands with a large interval, a change of the in-position status has a delay, impact is not great, and power consumption of the card reader device can be further reduced.

For example, after reading the information about the first silent tag for the first time, the NFC module sends a private card searching request command once in each polling period, sends a private card searching request command every two polling periods after receiving a private card searching answer to request command corresponding to a private card searching request command for the fifth time, sends a private card searching request command once every three polling periods after receiving a private card searching answer to request command for the tenth time, and so on. After a private card searching request command is sent once every five polling periods, the interval is maintained for sending.

It may be understood that actions performed by the NFC module shown in FIG. 4A to FIG. 4D are also actions performed by the card reader device in which the NFC module is located. Therefore, from perspectives of the card reader device and the tag device, the foregoing process may include:
The card reader device sends the card searching request commands in the polling manner, including the standard card searching request commands and the private card searching request commands. When the first silent tag does not approach the card reader device, the in-position flag corresponding to the first silent tag is false. After the first silent tag approaches the card reader device, the card reader device receives the private card searching answer to request command from the first silent tag. The card reader device reads the information about the first silent tag on a basis that the in-position flag corresponding to the first silent tag is false and on a basis that the private card searching answer to request command from the first silent tag is received. In addition, the card reader device determines that the first silent tag is switched from "not-in-position" to "in-position", and the in-position flag corresponding to the first silent tag is set to true. After reading of the information about the first silent tag is complete, the data reading procedure of the first silent tag is no longer performed, to reduce power consumption of the card reader device.

In addition, after reading of the information about the first silent tag is complete, the card reader device may enter the listen mode and the polling mode in the phase 1 based on the working period of the NFC module, and send the NFC card searching request commands in the polling manner. The NFC card searching request commands include the standard card searching request commands and the private card searching request commands, so that the card reader device can read content of the other NFC tags. Therefore, the functions such as NFC card swiping, card reading, and P2P interaction of the card reader device can be normally performed. In addition, when the first silent tag is continuously in position, the interval at which the card reader device sends the card searching request commands corresponding to the first silent tag may be increased, to further reduce power consumption of the card reader device.

In addition, the first silent tag makes a response and is activated only based on the private card searching request command, which does not easily cause unnecessary data reading, and can implement on-demand triggering and on-demand data reading. After the first silent tag leaves the card reader device, the card reader device sets the in-position flag corresponding to the first silent tag to false, to determine, next time based on the in-position flag, whether the first silent tag is switched from "not-in-position" to "in-position", so as to determine whether to perform the data reading procedure of the first silent tag.

In addition, another embodiment of this application provides an NFC-based data exchange method, so that a card reader device can read content in a silent tag of a tag device, and when the silent tag is continuously in position, power consumption of the card reader device is low. In addition, NFC read and write functions are not affected, and functions such as NFC card swiping, card reading, and P2P interaction can be normally performed.

In some embodiments, NFC-related functions of the card reader device in the method may be implemented based on the NFC module and processing procedures shown in FIG. 4A to FIG. 4D.

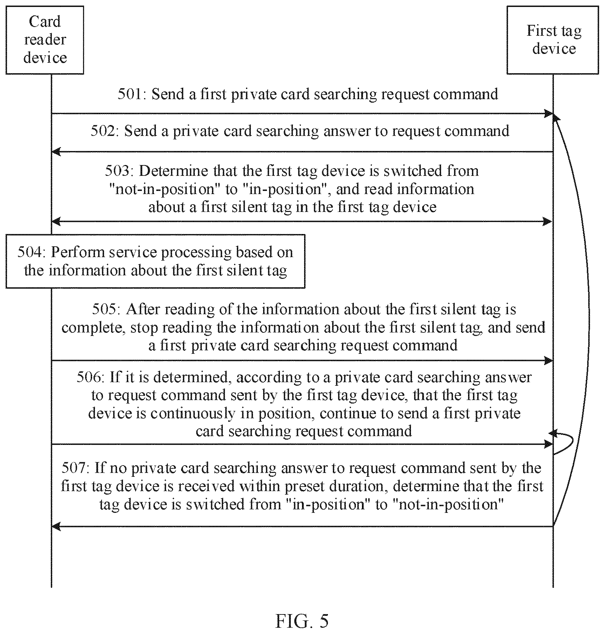

With reference to an accompanying drawing, the following describes a method provided in an embodiment of this application by using an example in which a card reader device is the electronic device having the structure shown in FIG. 3, and a tag device supports a silent tag. Refer to FIG. 5. The method may include the following steps.

501: The card reader device sends a first private card searching request command.

The card reader device may send the first private card searching request command by using a radio frequency signal according to an indication operation of a user. For example, the card reader device may send the first private card searching request command by using the radio frequency signal after the user enables an NFC function (for example, a wireless charging function) corresponding to the first private card searching request command on the card reader device.

Alternatively, as shown in FIG. 4C, the card reader device enters a listen mode and a polling mode in a phase 1 based on a working period of an NFC module, and sends NFC card searching request commands in a polling manner, including sending standard NFC card searching request commands and private NFC card searching request commands. The private NFC card searching request commands include the first private card searching request command.

An occasion in which the card reader device sends the first private card searching request command is not limited in this embodiment of this application.

502: After receiving the first private card searching request command, a first tag device sends a private card searching answer to request command to the card reader device.

After the first tag device approaches the card reader device, the first tag device may receive the first private card searching request command. If the first tag device determines that a supported first silent tag can respond to the first private card searching request command, the first tag device sends the private card searching answer to request command to the card reader device. The private card searching answer to request command corresponds to the first private card searching request command. After receiving a card searching request command of another type, the first tag device does not make a response, and does not send a card searching answer to request command to the card reader device.

503: After receiving the private card searching answer to request command, the card reader device determines that the first tag device is switched from "not-in-position" to "in-position", and reads information about the first silent tag in the first tag device.

After receiving the private card searching answer to request command, the card reader device determines that the first tag device approaches the card reader device. As shown in FIG. 4C, the card reader device is in a state 1, enters a phase 2 from a phase 1, and reads the information about the first silent tag. For a command interaction procedure in which the card reader device reads the information about the first silent tag, refer to FIG. 4D.

In some embodiments, an in-position flag corresponding to the silent tag that can respond to the first private card searching request command may be set in the card reader device, in other words, an in-position flag corresponding to the first silent tag is set.

It may be understood that, because the silent tag is integrated in the tag device, "in-position" of the silent tag may also be understood as "in-position" of the tag device. Correspondingly, that the silent tag is not in position may also be understood as that the tag device is not in position. Therefore, an in-position status of the tag device also includes "in-position" or "not-in-position". The in-position flag corresponding to the silent tag may also be understood as an in-position flag corresponding to the tag device in which the silent tag is located.

If the in-position flag corresponding to the first tag device is in a first state (which may be the first state by default, or the first state is switched after a second state is switched, which is not limited), the information about the first silent tag is read after the private card searching answer to request command sent by the first tag device is received. In addition, the first tag device is switched from "not-in-position" to "in-position", and the card reader device switches the in-position flag corresponding to the first tag device from the first state to the second state. The in-position flag corresponding to the first tag device is the in-position flag corresponding to the first silent tag in the first tag device.

504: The card reader device performs service processing based on the information about the first silent tag.

The card reader device may perform related service processing based on the information about the first silent tag. For example, a service may be a customized theme, or wireless charging.

505: After reading of the information about the first silent tag is complete, the card reader device stops reading the information about the first silent tag, and sends a first private card searching request command.

After reading of the information about the first silent tag is complete, the card reader device no longer sends a read command for the first silent tag, and stops reading the information about the first silent tag. In this way, power consumption caused by continuously reading the information about the first silent tag by the card reader device can be reduced.

After reading of the information about the first silent tag is complete, the card reader device may send the first private card searching request command, to determine whether the first tag device is continuously in position.

For example, the card reader device enters a phase 3 from the phase 2 shown in FIG. 4C, and is in a state 2.

In addition, after step 505, the method further includes the following step.

506: If the card reader device determines, according to a private card searching answer to request command sent by the first tag device, that the first tag device is continuously in position, continue to send a first private card searching request command, and cyclically perform step 506.

After receiving the private card searching answer to request command sent by the first tag device, the card reader device determines, on a basis that the in-position flag corresponding to the first tag device is in the second state, that the first tag device is continuously in-position instead of just switching from "not-in-position" to "in-position". In addition, the card reader device has read the information about the first silent tag, and therefore no longer performs a data reading procedure of the first silent tag. The card reader device keeps the in-position flag corresponding to the first tag device as true. In addition, the card reader device continues to send the first private card searching request command, to continue to detect whether the first tag device is continuously in position.

In some embodiments, the method may further include: The card reader device adjusts a period of sending first private card searching request commands when the first tag device is continuously in position. For example, the card reader device increases an interval of sending the first private card searching request commands, to further reduce power consumption of the card reader device. For the process, refer to the foregoing specific descriptions about increasing the sending interval. Details are not described again.

If the first tag device is continuously in position, the card reader device is in a state 3 shown in FIG. 4C.

In addition, after reading of the information about the first silent tag is complete, when the first tag device is continuously in position, the card reader device may further send card searching request commands other than the first private card searching request command. In this way, the card reader device may perform data exchange with other NFC tags (including general tags and the silent tag) by using the other card searching request commands, and read information about the other NFC tags. Therefore, when the first tag device is continuously in position, it is ensured that the card reader normally performs functions such as NFC card swiping, card reading, and P2P interaction.

For example, when the first tag device is continuously in position, the card reader device may further send a second private card searching request command. If a private card searching answer to request command (corresponding to the second private card searching request command) is received from a second tag device, and if it is determined that the second tag device is switched from "not-in-position" to "in-position", information about a second silent tag in the second tag device is read. For another example, when the first tag device is continuously in position, the card reader device may further send a first standard card searching request command. If a card searching answer to request command (corresponding to the first standard card searching request command) is received from a third tag device, information about an NFC tag in the third tag device is read.

In some embodiments, after reading of the information about the first silent tag is complete, when the first tag device is continuously in position, as shown in FIG. 4C, the card reader device enters the phase 1 from the phase 3. The card reader device enters the listen mode and the polling mode in the phase 1 based on the working period of the NFC module, and sends a plurality of standard card searching request commands and a plurality of private card searching request command in the polling manner, to interact with the other NFC tags other than the first silent tag, and ensure that the functions such as NFC card swiping, card reading, or P2P interaction are normal.

After step 505, the method may further include the following step.

507: If the card reader device does not receive, within first preset duration, the private card searching answer to request command sent by the first tag device, determine that the first tag device is switched from "in-position" to "not-in-position", and then perform step 501.

If the card reader device does not receive, within the first preset duration, the private card searching answer to request command sent by the first tag device, the first tag device leaves, the first tag device is switched from "in-position" to "not-in-position", and the in-position flag corresponding to the first tag device is set to false. In this case, the card reader device is in a state 4 shown in FIG. 4C, and enters the phase 1.

In the solution described in steps 501 to 507, the card reader device may read the information about the first silent tag in the first tag device after determining, by using the first private card searching request command, that the first tag device is switched from "not-in-position" to "in-position". In this way, the first tag device makes a response and is activated only based on the first private card searching request command, which does not easily cause unnecessary data reading, and can implement on-demand triggering and on-demand data reading. In addition, based on privatization of a card searching request command, a customized feature can be implemented, and a high-security solution can be provided to meet privatization and security of a customized scenario.

In addition, after the card reader device completes reading of the information about the first silent tag, even if the first tag device is always in position, the card reader device does not read the information about the first silent tag again. In this way, power consumption caused by continuously reading the information about the first silent tag by the card reader device can be reduced.

In addition, after reading of the information about the first silent tag is complete, the card reader device may send the NFC card searching request commands in the polling manner, including the standard NFC card searching request commands and the private NFC card searching request commands, to identify the other NFC tags and read the information about the other NFC tags. In this way, even if the first tag device is always in position, an NFC function of the card reader device does not fail or is affected, and NFC card swiping or card reading can be normally performed.

In addition, the solution provided in this embodiment of this application achieves the foregoing objective by using an NFC protocol interaction procedure. An implementation procedure is simple, has high real-time performance, and has universality. In addition, additional components such as a Hall sensor are not required, so that hardware space of the card reader device and the first tag device can be saved, a hardware design can be simplified, and device costs can be reduced.

The NFC-based data exchange method provided in the foregoing steps 501 to 507 may be applied to a plurality of service scenarios, and may have diversified application forms. The following describes the service scenarios by using examples.

Scenario example 1: Mobile phone cover customized theme scenario:
For example, in this scenario, the card reader device may be a mobile phone, and the first tag device may be a mobile phone cover (or referred to as a theme cover). The mobile phone cover supports a first silent tag, and the first silent tag may be an active tag, a passive tag, or a tag emulated by an NFC module. The first silent tag stores customized theme information. The first silent tag is in a silent state by default, and may respond to the first private card searching request command.

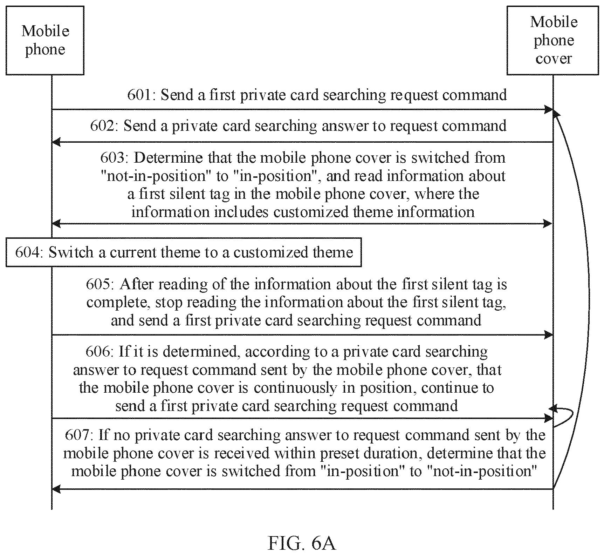

In the mobile phone cover customized theme scenario, refer FIG. 6A. An NFC-based data exchange method provided in this embodiment of this application may include the following steps.

601: The mobile phone sends a first private card searching request command.

For example, the mobile phone may send the first private card searching request command by using a radio frequency signal according to an indication operation of a user. Alternatively, the mobile phone may periodically send NFC card searching request commands in a polling manner in a polling mode shown in FIG. 4C, where the NFC card searching request commands include standard card searching request commands and private card searching request commands, and the private card searching request commands include the first private card searching request command.

An occasion in which the mobile phone sends the first private card searching request command is not limited in this embodiment of this application.

602: After receiving the first private card searching request command, the mobile phone cover sends a private card searching answer to request command to the mobile phone.

Before the mobile phone cover approaches the mobile phone, an in-position flag corresponding to the first silent tag in the mobile phone is false. After the mobile phone cover approaches the mobile phone, the first private card searching request command may be received. If the mobile phone cover determines that the supported first silent tag can respond to the first private card searching request command, the mobile phone cover sends the private card searching answer to request command to the mobile phone.

603: After receiving the private card searching answer to request command sent by the mobile phone cover, the mobile phone determines that the mobile phone cover is switched from "not-in-position" to "in-position", and reads information about the first silent tag in the mobile phone cover, where the information includes the customized theme information.

The customized theme information may be encrypted information, or may be unencrypted information. This is not limited. In this embodiment of this application, an example in which the customized theme information is the encrypted information is used for description. After receiving the private card searching answer to request command sent by the mobile phone cover, the mobile phone may set the in-position flag corresponding to the first silent tag to true.

604: The mobile phone switches a current theme to a customized theme based on the information about the first silent tag.

The NFC module of the mobile phone reports the read customized theme information to a theme module of the mobile phone, and the theme module decrypts the theme information, and then switches the current theme to the customized theme. In this way, when the mobile phone approaches the mobile phone cover, the customized theme (for example, the customized theme may be a cool theme, a VIP theme, or a theme that cannot be downloaded from an official website) can be quickly switched to, and user experience is good.

605: After reading of the information about the first silent tag is complete, the mobile phone stops reading the information about the first silent tag, and sends a first private card searching request command.

After reading of the information about the first silent tag is complete, the mobile phone no longer sends a read command for the first silent tag, and stops reading the information about the first silent tag. Therefore, power consumption caused by continuously reading the information about the first silent tag by the mobile phone can be reduced.

After reading of the information about the first silent tag is complete, the mobile phone may further send the first private card searching request command, to determine whether the mobile phone cover is continuously in position.

606: If the mobile phone determines, according to a private card searching answer to request command sent by the mobile phone cover, that the mobile phone cover is continuously in position, continue to send a first private card searching request command, and cyclically perform step 606.

After receiving the private card searching answer to request command sent by the mobile phone cover, the mobile phone determines, on a basis that the in-position flag corresponding to the first silent tag is true, that the mobile phone cover is continuously in position, and that the mobile phone has read the information about the first silent tag, and therefore no longer reads the information about the first silent tag and keeps the in-position flag corresponding to the first silent tag as true. In addition, the mobile phone continues to send the first private card searching request command, to continue to detect whether the mobile phone cover is continuously in position.

In some embodiments, the method may further include: after the mobile phone determines that the mobile phone cover is continuously in position, increasing an interval of sending first private card searching request commands, to further reduce power consumption of the mobile phone.

In addition, after reading of the information about the first silent tag is complete, when the mobile phone cover is continuously in position, the mobile phone may further send card searching request commands other than the first private card searching request command. In this way, the mobile phone may perform data exchange with other NFC tags (including general tags and the silent tag) by using the other card searching request commands, and read information about the other NFC tags. In this way, when the mobile phone cover is continuously in position, it is ensured that the mobile phone normally performs NFC card swiping and card reading. For example, in the polling mode shown in FIG. 4C, the mobile phone periodically sends the standard card searching request commands and the private card searching request commands in the polling manner.

After step 605, the method further includes the following step.

607: If the mobile phone does not receive, within first preset duration, the private card searching answer to request command sent by the mobile phone cover, determine that the mobile phone cover is switched from "in-position" to "not-in-position", and then perform the foregoing step 601.

If the mobile phone does not receive, within the first preset duration, the private card searching answer to request command sent by the mobile phone cover, the first silent tag leaves, the mobile phone is switched from "in-position" to "not-in-position", and the in-position flag corresponding to the first silent tag is set to false. In this case, the mobile phone can switch the customized theme back to a default theme.

For example, the first preset duration is greater than the interval of sending the first private card searching request commands. In this way, if the mobile phone does not receive a private card searching answer to request command sent by the mobile phone cover after sending two first private card searching request commands, the mobile phone cover may have left, and the mobile phone determines that the mobile phone cover is switched from "in-position" to "not-in-position".

It should be noted that, for a correspondence between steps 601 to 607 and FIG. 4A to FIG. 4D, refer to the descriptions of a correspondence between steps 501 to 507 and FIG. 4A to FIG. 4D, and details are not described herein again.

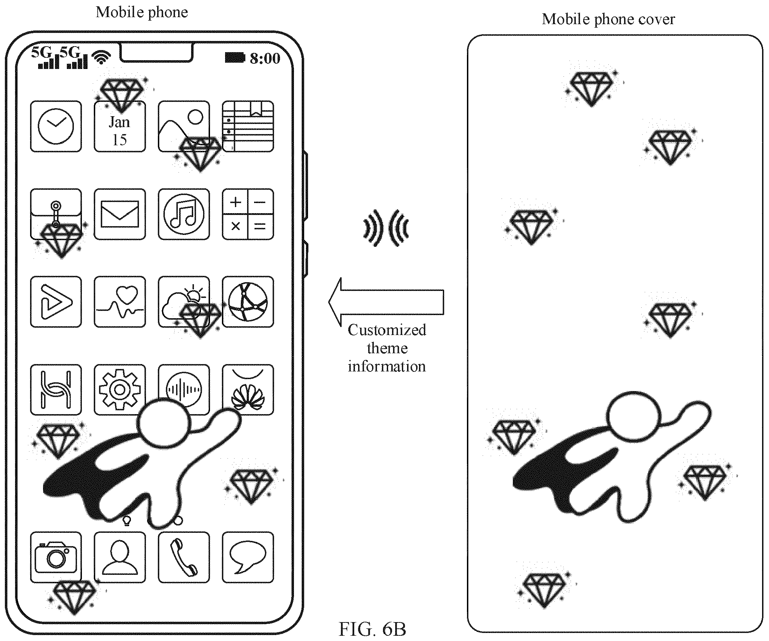

In some embodiments, based on the NFC processing procedures shown in FIG. 4A to FIG. 4D, the solution described in steps 601 to 607 may specifically include:
The mobile phone sends the NFC card searching request commands in the polling manner based on a working period of the NFC module, where the NFC card searching request commands include the standard card searching request commands and the private card searching request commands, and the private card searching request commands include the first private card searching request command. When the mobile phone cover does not approach the mobile phone, the in-position flag corresponding to the first silent tag is false. After the mobile phone cover approaches the mobile phone, the mobile phone receives the private card searching answer to request command from the first silent tag. The mobile phone reads the customized theme information stored in the first silent tag on a basis that the in-position flag corresponding to the first silent tag is false and on a basis that the private card searching answer to request command from the first silent tag is received, and switches the current theme to the customized theme. In addition, the mobile phone switches the first silent tag from "not-in-position" to "in-position". After reading of the information about the first silent tag is complete, a data reading procedure of the first silent tag is no longer performed. The mobile phone sends the standard card searching request commands and the private card searching request commands in the polling manner based on the working period of the NFC module, to perform data exchange with the other NFC tags, where the private card searching request commands include the first private card searching request command. In addition, when the first silent tag is continuously in position, the interval at which the mobile phone sends the card searching request commands corresponding to the first silent tag may be increased. After the mobile phone cover leaves the mobile phone, the mobile phone sets the in-position flag corresponding to the first silent tag to false, and switches back to the default theme. For example, for a schematic diagram of switching the customized theme based on NFC between the mobile phone and the mobile phone cover, refer to FIG. 6B.

In the solution described in the scenario example 1, after determining, by using the first private card searching request command, that the mobile phone cover is switched from "not-in-position" to "in-position" (for example, the mobile phone cover is sleeved on the mobile phone), the mobile phone may read the customized theme information stored in the first silent tag in the mobile phone cover, thereby implementing tap to switch theme. In this way, the mobile phone cover makes a response and is activated only based on the first private card searching request command, which does not easily cause unnecessary data reading, and can implement on-demand triggering and on-demand data reading.

In addition, after the mobile phone completes reading of the information about the first silent tag, even if the mobile phone cover is always in position (to be specific, the mobile phone cover is always sleeved on the mobile phone), the mobile phone does not read the information about the first silent tag again. Therefore, power consumption caused by continuously reading the information about the first silent tag by the mobile phone can be reduced.

In addition, after reading of the information about the first silent tag is complete, the mobile phone may send the NFC card searching request commands in the polling manner, including the standard NFC card searching request commands and the private NFC card searching request commands, to identify the other NFC tags and read the information about the other NFC tags. In this way, even if the mobile phone cover is always in position, an NFC function of the mobile phone does not fail or is affected, and NFC card swiping or card reading can be normally performed.

In addition, the solution provided in this embodiment of this application achieves the foregoing objective by using an NFC protocol interaction procedure. An implementation procedure is simple, has high real-time performance, and has universality. In addition, additional components such as a Hall sensor are not required, so that hardware space of the mobile phone and the mobile phone cover can be saved, a hardware design can be simplified, and device costs can be reduced.

Scenario example 2: Device anti-counterfeiting and parameter optimization scenario:
For example, in this scenario, the card reader device may be a mobile phone, and the first tag device may be a wireless charger (or referred to as a charging case). The wireless charger supports a first silent tag, and the first silent tag may be an active tag, a passive tag, or a tag emulated by an NFC module. The first silent tag stores information such as a charger anti-counterfeiting identifier and/or a charging optimization parameter. The first silent tag is in a silent state by default, and may respond to the first private card searching request command.

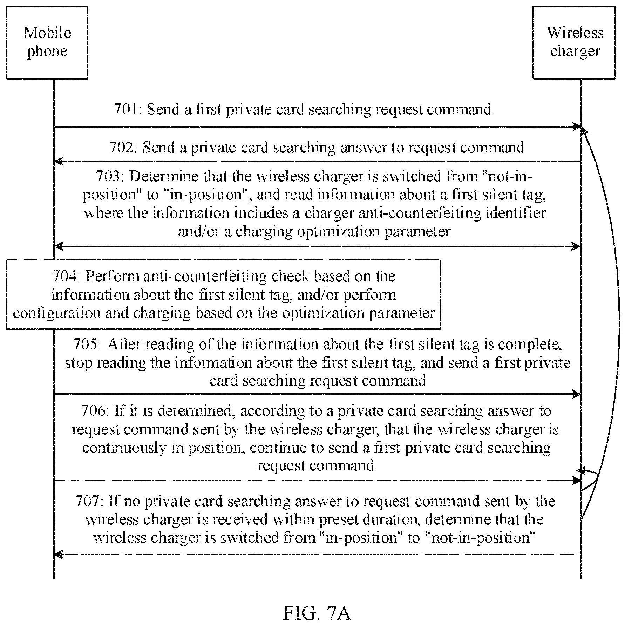

In the device anti-counterfeiting and parameter optimization scenario, refer to FIG. 7A. An NFC-based data exchange method provided in this embodiment of this application may include the following steps.

701: The mobile phone sends a first private card searching request command.

702: After receiving the first private card searching request command, the wireless charger sends a private card searching answer to request command to the mobile phone.

An implementation process of steps 701 and 702 is similar to an implementation process of steps 601 and 602. For details, refer to the foregoing related descriptions. Details are not described herein again.

703: After receiving the private card searching answer to request command sent by the wireless charger, the mobile phone determines that the wireless charger is switched from "not-in-position" to "in-position", and reads information about the first silent tag in the wireless charger, where the information includes the charger anti-counterfeiting identifier and/or the charging optimization parameter.

After receiving the private card searching answer to request command sent by the wireless charger, the mobile phone may set an in-position flag corresponding to the first silent tag to true.

704: The mobile phone performs anti-counterfeiting check based on the information about the first silent tag, and/or performs configuration and charging based on the optimization parameter.

The NFC module of the mobile phone reports the read information such as the charger anti-counterfeiting identifier and/or the charging optimization parameter to a charging module of the mobile phone, and the charging module performs anti-counterfeiting check, and/or performs configuration and charging based on the optimization parameter. In this way, when the mobile phone approaches the wireless charger, charging anti-counterfeiting check can be quickly performed or charging can be quickly performed based on the optimization parameter, and user experience is good.

705: After reading of the information about the first silent tag is complete, the mobile phone stops reading the information about the first silent tag, and sends a first private card searching request command.

706: If the mobile phone determines, according to a private card searching answer to request command sent by the wireless charger, that the wireless charger is continuously in position, continue to send a first private card searching request command, and cyclically perform step 706.

An implementation process of steps 705 and 706 is similar to an implementation process of steps 605 and 606. For details, refer to the foregoing related descriptions. Details are not described herein again.

In some embodiments, the method may further include: after the mobile phone determines that the wireless charger is continuously in position, increasing an interval of sending first private card searching request commands, to further reduce power consumption of the mobile phone.

In addition, after reading of the information about the first silent tag is complete, when the wireless charger is continuously in position, the mobile phone may further send card searching request commands other than the first private card searching request command. In this way, the mobile phone may perform data exchange with other NFC tags (including general tags and the silent tag) by using the other card searching request commands, and read information about the other NFC tags. In this way, when the wireless charger is continuously in position, it is ensured that the mobile phone normally performs NFC card swiping and card reading. For example, in a polling mode shown in FIG. 4C, the mobile phone periodically sends standard card searching request commands and private card searching request commands in a polling manner.

After step 705, the method further includes the following step.

707: If the mobile phone does not receive, within first preset duration, the private card searching answer to request command sent by the wireless charger, determine that the wireless charger is switched from "in-position" to "not-in-position", and then perform the foregoing step 701.

If the mobile phone does not receive, within the first preset duration, the private card searching answer to request command sent by the wireless charger, the first silent tag leaves, the wireless charger is switched from "in-position" to "not-in-position", and the in-position flag corresponding to the first silent tag is set to false. In this case, the mobile phone can stop charging.

It should be noted that, for a correspondence between steps 701 to 707 and FIG. 4A to FIG. 4D, refer to the descriptions of a correspondence between steps 501 to 507 and FIG. 4A to FIG. 4D, and details are not described herein again.

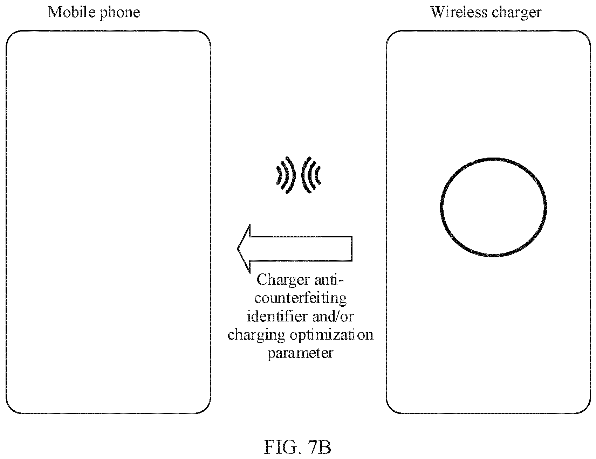

In some embodiments, based on the NFC processing procedures shown in FIG. 4A to FIG. 4D, the solution described in steps 701 to 707 may include:
The mobile phone sends card searching request commands in a polling manner based on a working period of the NFC module, where the card searching request commands include the standard card searching request commands and the private card searching request commands, and the private card searching request commands include the first private card searching request command. When the wireless charger does not approach the mobile phone, the in-position flag corresponding to the first silent tag is false. After the wireless charger approaches the mobile phone, the mobile phone receives the private card searching answer to request command from the first silent tag. The mobile phone reads the anti-counterfeiting identifier and/or the optimization parameter stored in the first silent tag on a basis that the in-position flag corresponding to the first silent tag is false and on a basis that the private card searching answer to request command from the first silent tag is received, to perform anti-counterfeiting check and/or charging optimization. In addition, the mobile phone switches the first silent tag from "not-in-position" to "in-position". After reading of the information about the first silent tag is complete, a data reading procedure of the first silent tag is no longer performed. The mobile phone sends the standard card searching request commands and the private card searching request commands in the polling manner based on the working period, to perform data exchange with the other NFC tags, where the private card searching request commands include the first private card searching request command. In addition, when the first silent tag is continuously in position, the interval at which the mobile phone sends the card searching request commands corresponding to the first silent tag may be increased. After the wireless charger leaves the mobile phone, the mobile phone sets the in-position flag corresponding to the first silent tag to false, and stops wireless charging. For example, for a schematic diagram of wireless charging performed by the mobile phone and the wireless charger based on NFC, refer to FIG. 7B.

In the solution described in the scenario example 2, after determining, by using the first private card searching request command, that the wireless charger is switched from "not-in-position" to "in-position" (for example, the wireless charger approaches the mobile phone), the mobile phone may read the information such as the anti-counterfeiting identifier and/or the charging optimization parameter that is stored in the first silent tag of the wireless charger, thereby implementing tap to optimize charging. In this way, the wireless charger makes a response and is activated only based on the first private card searching request command, which does not easily cause unnecessary data reading, and can implement on-demand triggering and on-demand data reading.

In addition, after the mobile phone completes reading of the information about the first silent tag, even if the wireless charger is always in position (to be specific, the wireless charger always approaches the mobile phone), the mobile phone does not read the information about the first silent tag again. Therefore, power consumption caused by continuously reading the information about the first silent tag by the mobile phone can be reduced.

In addition, after reading of the information about the first silent tag is complete, the mobile phone may send the NFC card searching request commands in the polling manner, including the standard NFC card searching request commands and the private NFC card searching request commands, to identify the other NFC tags and read the information about the other NFC tags. In this way, even if the wireless charger is always in position, an NFC function of the mobile phone does not fail or is affected, and NFC card swiping or card reading can be normally performed.

In addition, the solution provided in this embodiment of this application achieves the foregoing objective by using an NFC protocol interaction procedure. An implementation procedure is simple, has high real-time performance, and has universality. In addition, additional components such as a Hall sensor are not required, so that hardware space of the mobile phone and the wireless charger can be saved, a hardware design can be simplified, and device costs can be reduced.

Scenario example 3: A scenario in which reverse charging is enabled:
For example, in this scenario, the card reader device may be a mobile phone, and the first tag device may be a smartwatch (hereinafter referred to as a watch). The watch supports a first silent tag, and the first silent tag may be an active tag, a passive tag, or a tag emulated by an NFC module. Generally, an NFC chip is disposed in the watch, and may emulate the first silent tag. In this case, the watch does not need to set an additional first silent tag. The first silent tag stores information such as identification information of the watch. The first silent tag is in a silent state by default, and may respond to the first private card searching request command.

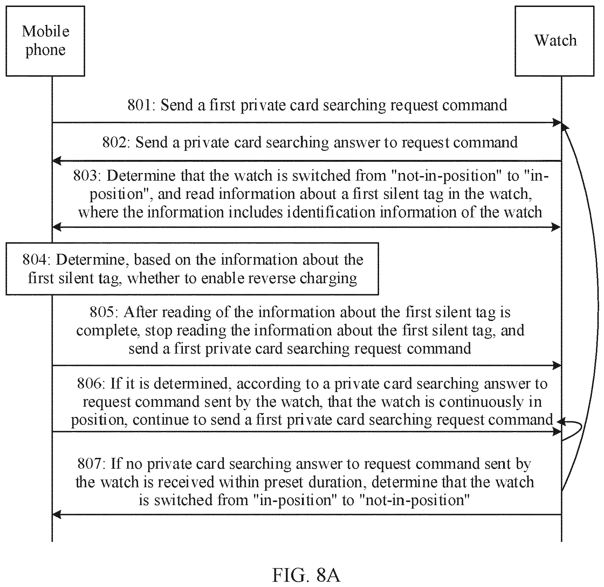

In the scenario in which reverse charging is enabled, refer FIG. 8A. An NFC-based data exchange method provided in this embodiment of this application may include the following steps.

801: The mobile phone sends a first private card searching request command.

802: After receiving the first private card searching request command, the watch sends a private card searching answer to request command to the mobile phone.

An implementation process of steps 801 and 802 is similar to an implementation process of steps 601 and 602. For details, refer to the foregoing related descriptions. Details are not described herein again.

803: After receiving the private card searching answer to request command sent by the watch, the mobile phone determines that the watch is switched from "not-in-position" to "in-position", and reads information about the first silent tag in the watch, where the information includes the identification information of the watch.

After receiving the private card searching answer to request command sent by the watch, the mobile phone may set an in-position flag corresponding to the first silent tag to true.

804: The mobile phone determines, based on the information about the first silent tag, whether to enable reverse charging.

The NFC module of the mobile phone reports the read information such as the identification information of the watch to a charging module of the mobile phone. The charging module maintains an identification information list supported by charging. The charging module determines, based on the identification information of the watch and the identification information list, whether the watch supports wireless charging. If the watch supports wireless charging, the mobile phone enables a reverse charging function to charge the watch. If the watch does not support wireless charging, the mobile phone does not enable a reverse charging function. In this way, reverse charging can be quickly enabled when the mobile phone approaches the watch. Compared with a current need to manually enable the reverse charging function of the mobile phone, user experience is greatly improved, many user operation steps can be saved, and learning costs of a user can be reduced.

In addition, in this solution, a charging coil configured to perform reverse charging on the mobile phone may be close to an antenna configured to perform NFC communication, so that when the watch is at a same location, the mobile phone can enable reverse charging through NFC, and perform charging by using the charging coil, to avoid repeatedly adjusting a location of the watch.

805: After reading of the information about the first silent tag is complete, the mobile phone stops reading the information about the first silent tag, and sends a first private card searching request command.

806: If the mobile phone determines, according to a private card searching answer to request command sent by the watch, that the watch is continuously in position, continue to send a first private card searching request command, and cyclically perform step 806.

An implementation process of steps 805 and 806 is similar to an implementation process of steps 605 and 606. For details, refer to the foregoing related descriptions. Details are not described herein again.

In some embodiments, the method may further include: after the mobile phone determines that the watch is continuously in position, increasing an interval of sending first private card searching request commands, to further reduce power consumption of the mobile phone.

In addition, after reading of the information about the first silent tag is complete, when the watch is continuously in position, the mobile phone may further send card searching request commands other than the first private card searching request command. In this way, the mobile phone may perform data exchange with other NFC tags (including general tags and the silent tag) by using the other card searching request commands, and read information about the other NFC tags. In this way, when the watch is continuously in position, it is ensured that the mobile phone normally performs NFC card swiping and card reading. For example, in a polling mode shown in FIG. 4C, the mobile phone periodically sends standard card searching request commands and private card searching request commands in a polling manner.

After step 805, the method further includes the following step.

807: If the mobile phone does not receive, within first preset duration, the private card searching answer to request command sent by the watch, determine that the watch is switched from "in-position" to "not-in-position", and then perform the foregoing step 801.

It should be noted that, for a correspondence between steps 801 to 807 and FIG. 4A to FIG. 4D, refer to the descriptions of a correspondence between steps 501 to 507 and FIG. 4A to FIG. 4D, and details are not described herein again.

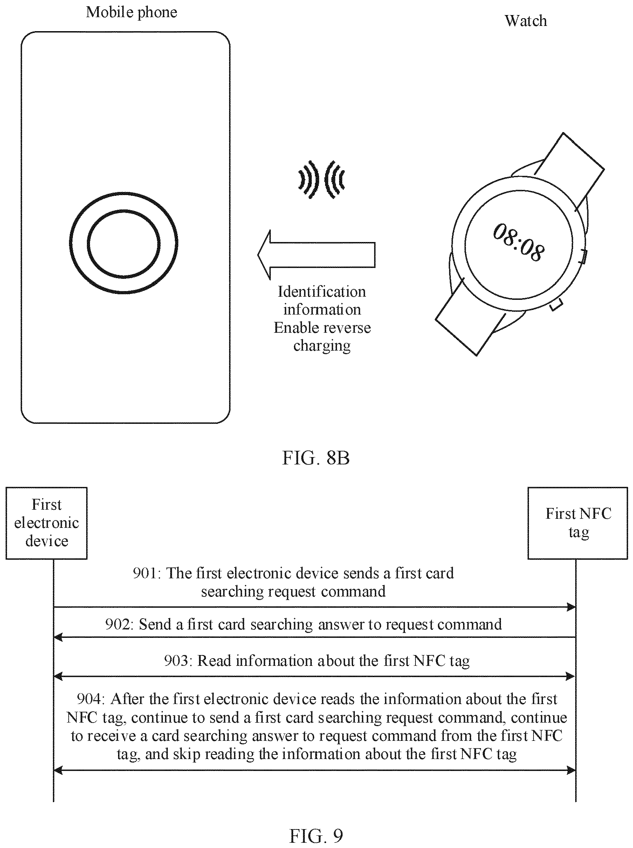

In some embodiments, based on the NFC processing procedures shown in FIG. 4A to FIG. 4D, the solution described in steps 801 to 807 may include:
The mobile phone sends card searching request commands in the polling manner based on a working period of the NFC module, where the card searching request commands include the standard card searching request commands and the private card searching request commands, and the private card searching request commands include the first private card searching request command. When the watch does not approach the mobile phone, the in-position flag corresponding to the first silent tag is false. After the watch approaches the mobile phone, the mobile phone receives the private card searching answer to request command from the first silent tag. The mobile phone determines, on a basis that the in-position flag corresponding to the first silent tag is false and on a basis that the private card searching answer to request command from the first silent tag is received, that the watch is switched from "not-in-position" to "in-position", to read identity information of the watch that is stored in the first silent tag, determines, based on the identity information, whether to enable reverse charging, and sets the in-position flag corresponding to the first silent tag to true. After reading of the information about the first silent tag is complete, a data reading procedure of the first silent tag is no longer performed. The mobile phone sends the standard card searching request commands and the private card searching request commands in the polling manner based on the working period of the NFC module, to read the information about the other NFC tags, where the private card searching request commands include the first private card searching request command. In addition, when the first silent tag is continuously in position, the interval at which the mobile phone sends the card searching request commands corresponding to the first silent tag may be increased. After the watch leaves the mobile phone, the mobile phone sets the in-position flag corresponding to the first silent tag to false, and stops reverse charging. For example, for a schematic diagram of reverse charging performed by the mobile phone and the watch based on NFC, refer to FIG. 8B.

In the solution described in the scenario example 3, after determining, by using the first private card searching request command, that the watch is switched from "not-in-position" to "in-position" (for example, the watch approaches the mobile phone), the mobile phone may read the information such as the identification information of the watch that is stored in the first silent tag of the watch, to determine whether to enable reverse charging, thereby implementing tap to enable reverse charging. In this way, the watch makes a response and is activated only based on the first private card searching request command, which does not easily cause unnecessary data reading, and can implement on-demand triggering and on-demand data reading.

After the mobile phone completes reading of the information about the first silent tag, even if the watch is always in position (to be specific, the watch always approaches the mobile phone), the mobile phone does not read the information about the first silent tag again. Therefore, power consumption caused by continuously reading the information about the first silent tag by the mobile phone can be reduced.

In addition, after reading of the information about the first silent tag is complete, the mobile phone may send the NFC card searching request commands in the polling manner, including the standard NFC card searching request commands and the private NFC card searching request commands, to identify other NFC tags and read the information about the other NFC tags. In this way, even if the watch is always in position, an NFC function of the mobile phone does not fail or is affected, and NFC card swiping or card reading can be normally performed.

In addition, the solution provided in this embodiment of this application achieves the foregoing objective by using an NFC protocol interaction procedure. An implementation procedure is simple, has high real-time performance, and has universality. In addition, additional components such as a Hall sensor are not required, so that hardware space of the mobile phone and the watch can be saved, a hardware design can be simplified, and device costs can be reduced.

It should be noted that the foregoing service scenarios and the card reader device and the tag device that are involved in the service scenarios are merely examples for description. The NFC-based data exchange method provided in embodiments of this application may be further applied to other electronic devices or other service scenarios. Examples are not enumerated herein.

In addition, with reference to the foregoing embodiments and the corresponding accompanying drawings, another embodiment of this application provides a data exchange method, which may be applied to a first electronic device that supports a card reader function and a first NFC tag. Refer to FIG. 9. The method may include the following steps.

901: The first electronic device sends a first card searching request command.

The first card searching request command is a private card searching request command, and is used to find a silent tag. The silent tag may interact with the first electronic device in response to the first card searching request command, so that the first electronic device can read information about the silent tag. For example, the first card searching request command may be the REQ-A-PR in the foregoing embodiment.

902: The first NFC tag sends a first card searching answer to request command to the first electronic device after receiving the first card searching request command from the first electronic device.

If the first NFC tag supports responding to the first card searching request command, the first NFC tag may reply the first card searching answer to request command to the first electronic device.

903: The first electronic device reads information about the first NFC tag after receiving the first card searching answer to request command from the first NFC tag.

If the first electronic device receives the first card searching answer to request command from the first NFC tag, it is possible that the first NFC tag and the first electronic device approach each other just from being far away from each other, and the first electronic device may read the information about the first NFC tag after the first electronic device detects the first NFC tag. For example, the information about the first NFC tag may include content such as customized theme information, a charger anti-counterfeiting identifier, a charging optimization parameter, or device identifier information.

The first electronic device is not in position before the first electronic device receives the first card searching answer to request command from the first NFC tag. After the first electronic device receives the first card searching answer to request command from the first NFC tag, the first electronic device detects the first NFC tag, and the first NFC tag is switched to "in-position".

904: After the first electronic device reads the information about the first NFC tag, the first electronic device continues to send a first card searching request command, continues to receive a card searching answer to request command from the first NFC tag, and skips reading the information about the first NFC tag.

After the first electronic device reads the information about the first NFC tag, if the first electronic device continues to receive the first card searching answer to request command from the first NFC tag, it is possible that the first NFC tag is continuously in a state that the first NFC tag approaches the first electronic device, and the first NFC tag is continuously in position. The first electronic device no longer reads the information about the first NFC tag.

In this way, when the first NFC tag is continuously in position, the first electronic device no longer reads the information about the first NFC tag. Therefore, NFC card searching commands including standard card searching commands and private card searching commands can be normally listened to and sent without being continuously in a data reading procedure, and information about other NFC tags can be normally read. In this way, functions such as NFC card reading, card swiping, and P2P can be normally performed.

In addition, when the first NFC tag is continuously in position, the first electronic device no longer reads the information about the first NFC tag, which can reduce power consumption of the electronic device.

In addition, the first electronic device reads the information about the silent tag that can respond to the first card searching request command, instead of any general NFC tag. Therefore, unnecessary data reading is not easily caused, and on-demand triggering and on-demand data reading can be implemented.

In addition, in this solution, data of the silent tag does not need to be read in combination with additional components such as a Hall sensor. Therefore, hardware space of the first electronic device and the silent tag can be saved, a hardware design can be simplified, and device costs can be reduced.

It may be understood that, to implement the foregoing functions, the electronic device includes a corresponding hardware and/or software module for performing each function. In combination with example algorithm steps described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this embodiment, the electronic device may be divided into functional modules based on the foregoing method examples. For example, each functional module corresponding to each function may be obtained through division, or two or more functions may be integrated into one processing module. The integrated module may be implemented in a form of hardware. It should be noted that, in this embodiment, division into the modules is an example, is merely logical function division, and may be other division during actual implementation.

When each functional module is obtained through division based on each corresponding function, in a possible schematic composition diagram of the electronic device 100 in the foregoing embodiment, the electronic device may include a sending unit, a receiving unit, a reading unit, a processing unit, and the like. It should be noted that all related content of the steps in the foregoing method embodiments may be cited in function description of corresponding functional modules. Details are not described herein again.

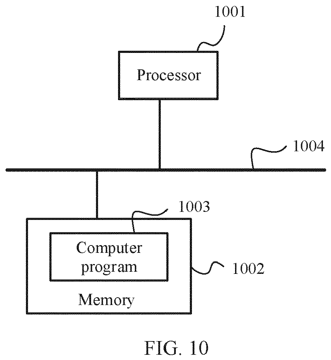

An embodiment of this application further provides an electronic device. The electronic device may be the foregoing card reader device or tag device. As shown in FIG. 10, the electronic device includes one or more processors 1001, a memory 1002, and one or more computer programs 1003. The components may be connected through one or more communication buses 1004. The one or more computer programs 1003 are stored in the memory 1002 and are executed by the one or more processors 1001. The one or more computer programs 1003 include instructions, and the instructions may be used to perform the steps performed by the card reader device or the steps performed by the tag device in the foregoing embodiments. All related content of the steps in the foregoing method embodiments may be cited in function descriptions of corresponding physical components. Details are not described herein again.

For example, the processor 1001 may be specifically the processor 110 shown in FIG. 3, and the memory 1002 may be specifically the internal memory 121 shown in FIG. 3.

An embodiment of this application further provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the foregoing related method steps, to implement the NFC-based data exchange methods in the foregoing embodiments.

An embodiment of this application further provides a computer-readable storage medium. The computer-readable storage medium stores computer instructions. When the computer instructions are run on an electronic device, the electronic device is enabled to perform the steps performed by the card reader device in the foregoing related method, or perform the steps performed by the silent tag in the foregoing related method, to implement the NFC-based data exchange methods in the foregoing embodiments.

An embodiment of this application further provides a computer program product. When the computer program product runs on a computer, the computer is enabled to perform the steps performed by the card reader device in the foregoing related method, or perform the steps performed by the silent tag in the foregoing related method, to implement the NFC-based data exchange methods in the foregoing embodiments.

In addition, an embodiment of this application further provides an apparatus. The apparatus may be specifically a chip (for example, an NFC chip), a component, or a module. The apparatus may include a processor and a memory that are connected. The memory is configured to store computer-executable instructions. When the apparatus runs, the processor may execute the computer-executable instructions stored in the memory, so that the apparatus performs the steps performed by the card reader device in the foregoing related method, or performs the steps performed by the silent tag in the foregoing related method, to implement the NFC-based data exchange methods in the foregoing embodiments.

In addition, an embodiment of this application further provides an NFC tag, which may perform the steps performed by the foregoing silent tag, to implement the NFC-based data exchange methods in the foregoing embodiments. The NFC tag may be emulated by using an NFC chip. The NFC tag may be an independent card, or may be disposed in an electronic device.

The electronic device, the computer-readable storage medium, the computer program product, the apparatus, or the NFC tag provided in embodiments is configured to perform the corresponding method provided above. Therefore, for beneficial effect that can be achieved, refer to the beneficial effect in the corresponding method provided above. Details are not described herein again.

Based on descriptions about the foregoing implementations, a person skilled in the art may understand that, for a purpose of convenient and brief description, division into the foregoing functional modules is used as an example for description. In actual application, the foregoing functions may be allocated to different functional modules and implemented based on a requirement. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A data exchange method, applied to a system comprising a first electronic device and a first near field communication NFC tag, wherein the method comprises:
sending, by the first electronic device, a first card searching request command;
sending, by the first NFC tag, a first card searching answer to request command to the first electronic device after receiving the first card searching request command from the first electronic device;
reading, by the first electronic device, information about the first NFC tag after receiving the first card searching answer to request command from the first NFC tag; and
after the first electronic device reads the information about the first NFC tag, continuing, by the first electronic device, to send the first card searching request command, continuing to receive a card searching answer to request command from the first NFC tag, and skipping reading the information about the first NFC tag.

2. The method according to claim 1, wherein the first electronic device is provided with a first identifier, wherein the first identifier indicates whether the first electronic device detects the first NFC tag;
before the first electronic device receives the first card searching answer to request command from the first NFC tag, a value of the first identifier is a first value, wherein the first value indicates that the first electronic device does not detect the first NFC tag; and
after the first electronic device receives the first card searching answer to request command from the first NFC tag, the first electronic device changes the value of the first identifier from the first value to a second value, wherein the second value indicates that the first electronic device detects the first NFC tag.

3. The method according to claim 2, wherein the method further comprises:
after the first electronic device continues to send the first card searching request command,
changing, by the first electronic device, the value of the first identifier from the second value to the first value if the first electronic device does not receive the first card searching answer to request command from the first NFC tag within preset duration; or
keeping the value of the first identifier as the second value if the first electronic device receives the first card searching answer to request command from the first NFC tag within the preset duration.

4. The method according to any one of claims 1 to 3, wherein the method further comprises:
increasing, by the first electronic device, a time interval for continuing to send a first card searching request command.

5. The method according to any one of claims 1 to 4, wherein the system further comprises a second NFC tag; and after the first electronic device reads the information about the first NFC tag, the method further comprises:
sending, by the first electronic device, a second card searching request command; and
if the first electronic device receives a second card searching answer to request command from the second NFC tag, reading information about the second NFC tag, wherein the second card searching answer to request command is a response of the second NFC tag to the second card searching request command.

6. The method according to any one of claims 1 to 5, wherein the first NFC tag is obtained through emulation by an NFC chip.

7. A data exchange method, applied to a first electronic device that supports a near field communication NFC card reading function, wherein the method comprises:
sending, by the first electronic device, a first card searching request command;
receiving, by the first electronic device, a first card searching answer to request command from a first NFC tag, wherein the first card searching answer to request command is a response of the first NFC tag to the first card searching request command;
reading, by the first electronic device, information about the first NFC tag after receiving the first card searching answer to request command from the first NFC tag; and
after the first electronic device reads the information about the first NFC tag, continuing, by the first electronic device, to send a first card searching request command, continuing to receive a card searching answer to request command from the first NFC tag, and skipping reading the information about the first NFC tag.

8. The method according to claim 7, wherein the first electronic device is provided with a first identifier, wherein the first identifier indicates whether the first electronic device detects the first NFC tag;
before the first electronic device receives the first card searching answer to request command from the first NFC tag, a value of the first identifier is a first value, wherein the first value indicates that the first electronic device does not detect the first NFC tag; and
after the first electronic device receives the first card searching answer to request command from the first NFC tag, the first electronic device changes the value of the first identifier from the first value to a second value, wherein the second value indicates that the first electronic device detects the first NFC tag.

9. The method according to claim 8, wherein the method further comprises:
after the first electronic device continues to send the first card searching request command,
changing, by the first electronic device, the value of the first identifier from the second value to the first value if the first electronic device does not receive the first card searching answer to request command from the first NFC tag within preset duration; or
keeping the value of the first identifier as the second value if the first electronic device receives the first card searching answer to request command from the first NFC tag within the preset duration.

10. The method according to any one of claims 7 to 9, wherein the method further comprises:
increasing, by the first electronic device, a time interval for continuing to send a first card searching request command.

11. The method according to any one of claims 7 to 10, wherein after the first electronic device reads the information about the first NFC tag, the method further comprises:
sending, by the first electronic device, a second card searching request command; and
if the first electronic device receives a second card searching answer to request command from a second NFC tag, reading information about the second NFC tag, wherein the second card searching answer to request command is a response of the second NFC tag to the second card searching request command.

12. The method according to any one of claims 7 to 11, wherein after the first electronic device reads the information about the first NFC tag, the method further comprises:
performing, by the first electronic device, service processing based on the information about the first NFC tag.

13. The method according to claim 12, wherein the performing, by the first electronic device, service processing based on the information about the first NFC tag comprises:
charging, by the first electronic device, a second electronic device based on identification information of the second electronic device in the first NFC tag.

14. The method according to claim 12, wherein the performing, by the first electronic device, service processing based on the information about the first NFC tag comprises:
switching, by the first electronic device, a theme of the first electronic device based on the information about the first NFC tag.

15. The method according to claim 12, wherein the performing, by the first electronic device, service processing based on the information about the first NFC tag comprises:
performing, by the first electronic device, charger anti-counterfeiting check and/or configuring a charging parameter based on the information about the first NFC tag.

16. An electronic device, comprising:
one or more processors,
a memory, and
one or more computer programs, wherein the one or more computer programs are stored in the memory, the one or more computer programs comprise instructions, and when the instructions are executed by the electronic device, the electronic device is enabled to perform the data exchange method performed by a first electronic device according to any one of claims 1 to 15.

17. A computer-readable storage medium, comprising computer instructions, wherein when the computer instructions are run on a computer, the computer is enabled to perform the data exchange method performed by a first electronic device according to any one of claims 1 to 15.

18. A computer program product, wherein when the computer program product runs on a computer, the computer is enabled to perform the data exchange method performed by a first electronic device according to any one of claims 1 to 15.

19. An apparatus, wherein the apparatus comprises at least one memory and at least one processor, and the at least one processor is coupled to the at least one memory, reads instructions in the at least one memory, and enables, according to the instructions, the apparatus to perform the method according to any one of claims 7 to 15.

20. A data exchange system, comprising a first electronic device and a first near field communication NFC tag, wherein the first electronic device and the first NFC tag are configured to perform the data exchange method according to any one of claims 1 to 15.
